# EUROPEAN PATENT SPECIFICATION

(11) **EP 3 118 165 B1**
(45) Date of publication and mention of the grant of the patent: **28.08.2019**
(21) Application number: 15176851.2
(22) Date of filing: 15.07.2015
(51) Int. Cl.: C02F 1/44, B01D 35/30, B01D 59/50, B01D 29/50

(54) **CONNECTOR FOR PLACING HEAD PART DEVICES OF A LIQUID TREATMENT APPARATUS IN LIQUID COMMUNICATION**
VERBINDER ZUR PLATZIERUNG VON KOPFTEILVORRICHTUNGEN EINER FLÜSSIGKEITSBEHANDLUNGSVORRICHTUNG IN FLÜSSIGKOMMUNIKATION
CONNECTEUR POUR DISPOSITIFS DE PARTIE DE TÊTE DE PLACEMENT D'UN APPAREIL DE TRAITEMENT DE LIQUIDE EN COMMUNICATION LIQUIDE

(43) Date of publication of application: 18.01.2017
(73) Proprietor: Brita GmbH, 65232 Taunusstein (DE)
(72) Inventor: Zöller, Jochen, 56355 Nastätten (DE)
(74) Representative: van Lookeren Campagne, Constantijn August

(56) References cited:
- US-A- 4 904 382
- US-A1- 2005 045 552
- US-A1- 2007 181 484
- US-A1- 2013 240 431

## Description

The invention relates to a connector for placing adjacent devices in a head part of a liquid treatment apparatus in liquid communication with each other,
wherein the head part devices are of the type arranged to receive at least a connecting head of a replaceable liquid treatment cartridge,
wherein a first of the head part devices has at least one inlet port, at least one first outlet port and at least one second outlet port,
wherein, at least in an operational position of the liquid treatment cartridge, only the first of the first and second outlet ports are in liquid communication with at least one of the inlet ports via the liquid treatment cartridge and the second outlet ports are in liquid communication with at least one of the inlet ports,
wherein a second of the head part devices has at least one first inlet port, at least one second inlet port and at least one outlet port,
wherein, at least in an operational position of the liquid treatment cartridge, only the first of the first and second inlet ports are in liquid communication with at least one of the outlet ports via the liquid treatment cartridge and the second inlet ports are in liquid communication with at least one of the outlet ports,
wherein the connector is one of: (i) positionable with respect to the head part devices such as to place the first and second outlet ports of the first head part device in sealed liquid communication with the second and first inlet ports of the second head part device, respectively; and (ii) positionable with respect to the head part devices such as to place at least the first outlet ports of the first head part device in sealed liquid communication with the first inlet ports of the second head part device,
wherein the connector has at least two connector inlet ports and at least two connector outlet ports,
wherein the connector includes a first flow conductor interconnecting a first sub-set of the connector inlet ports and a first sub-set of the connector outlet ports, and
wherein the connector includes a second flow conductor interconnecting a second sub-set of the connector inlet ports and a second sub-set of the connector outlet ports, and
   wherein flows of liquid through one of the first and second flow conductors are kept separate from those through the other by at least one of the first and second flow conductors.

The invention also relates to a set of connectors for placing adjacent devices in a head part of a liquid treatment apparatus in liquid communication with each other,
wherein the head part devices are of the type arranged to receive at least a connecting head of a replaceable liquid treatment cartridge,
wherein a first of the head part devices has at least one inlet port, at least one first outlet port and at least one second outlet port,
wherein, at least in an operational position of the liquid treatment cartridge, only the first of the first and second outlet ports are in liquid communication with at least one of the inlet ports via the liquid treatment cartridge and the second outlet ports are in liquid communication with at least one of the inlet ports,
wherein a second of the head part devices has at least one first inlet port, at least one second inlet port and at least one outlet port,
wherein, at least in an operational position of the liquid treatment cartridge, only the first of the first and second inlet ports are in liquid communication with at least one of the outlet ports via the liquid treatment cartridge and the second inlet ports are in liquid communication with at least one of the outlet ports,
wherein a first connector is positionable with respect to the head part devices such as to place the first and second outlet ports of the first head part device in sealed liquid communication with the second and first inlet ports of the second head part device, respectively, and a second connector is positionable with respect to the head part devices such as to place at least the first outlet ports of the first head part device in sealed liquid communication with the first inlet ports of the second head part device,
wherein each connector has at least two connector inlet ports and at least two connector outlet ports,
wherein each connector includes a first flow conductor interconnecting a first sub-set of the connector inlet ports and a first sub-set of the connector outlet ports, and
wherein each connector includes a second flow conductor interconnecting a second sub-set of the connector inlet ports and a second sub-set of the connector outlet ports, and
   wherein flows of liquid through one of the first and second flow conductors are kept separate from those through the other by at least one of the first and second flow conductors.

The invention also relates to a head part of a liquid treatment apparatus.

The invention also relates to a liquid treatment apparatus.

The invention also relates to a method of placing adjacent devices in a head part of a liquid treatment apparatus in liquid communication with each other.

WO 2005/021128 A2 discloses a fluid treatment system that includes fluid treatment modules or assemblies. Each module includes a head, a shell and a cartridge. Each module is mounted to a wall or other surface via a bracket. The head of each module has a body through which run two fluid lines. Each fluid line defines first and second fluid ports. Connectors enable a user releasably and fluidly to connect one module to another. One type of connector is generally H-shaped and connects two ports of one module to two ports of another module. The system can be easily reconfigured from a system in which the assemblies are connected in parallel to one in which the assemblies are connected in series. Ports of each head are located in the same positions on each head and permit connection to adjacent modules in at least two rotational positions of the heads. It is possible to re-configure the system so that fluid flows into both cartridges through the same port in both modules connected in series and out of both cartridges through the same port in both modules. Specifically, the head of the second module can be reversed by rotating the head after the heads have been disconnected.

The known system requires a separate support bracket with respect to which the head is mountable in two different orientations, separated by 180°. The head must be accessible to the cartridge and permit of fixing the cartridge in each of the orientations, which limits the number of types of mechanism for connecting the cartridge to the head that can be used, but also the possible locations of the cartridge ports. Essentially, only a straight-line insertion of the cartridge in longitudinal direction followed by rotation about this axis to provide a bayonet-type or screw-fit connection is possible. The cartridge ports should face in axial direction and generally be concentric.

It is an object of the invention to provide a connector, set of connectors, head part, liquid treatment apparatus and method that permit adjacent devices in the same orientation and of the same configuration to be placed in either of a series and a parallel arrangement.

This object is achieved according to a first aspect by the connector according to the invention, which is characterised in that the first and second flow conductors are arranged so that the separated flows of liquid cross each other.

With the liquid treatment cartridge in the operational position, each inlet port of a head part device is in liquid communication with at least one outlet port of the head part device, only the first of the first and second inlet ports are in liquid communication with at least one outlet port via the liquid treatment cartridge and only the first of the first and second outlet ports are in liquid communication with at least one inlet port via the liquid treatment cartridge. Thus, there is a liquid flow path that bypasses the liquid treatment cartridge. This flow path extends between a or the second inlet port(s) and a or the second outlet port(s).

The connector has at least two connector inlet ports and at least two connector outlet ports, such that separate sealed connections between the first outlet port or ports of the first head part device and a sub-set comprising at least one connector inlet port and between the second outlet port or ports of the first head part device and a sub-set comprising at least one other connector inlet port can be provided. The first sub-set of connector inlet ports and the first sub-set of connector outlet ports are interconnected separately from the second sub-set of connector inlet ports and the second sub-set of connector outlet ports. The first and second sub-sets are thus disjoint sub-sets. The flows of liquid through the first and second flow conductors are at least separable. That is to say that they are separate or that at most a defined interconnection that can be closed is provided. Such an interconnection would only be provided in an embodiment in which the adjacent (i.e. downstream) device were to have to provide a mix of liquid treated in both liquid treatment cartridges blended with liquid treated in only one of them. With the interconnection closed or not provided for, the flows of liquid are kept separate in the connector.

Assuming that the first outlet ports of the first head part device lie opposite the first inlet ports of the adjacent head part device and that the second outlet ports of the first head part device lie opposite the second inlet ports of the adjacent head part device, the parallel arrangement can be provided with a compact connector, because the first and second flow conductors are arranged such that the separated flows of liquid cross each other. That is to say that one of the flow conductors either intersects the other or that they lie across one another. In this constellation, the connector provides sealed liquid communication between the first outlet port of a first of the head part devices and the second inlet port of the adjacent head part device. It also provides sealed liquid communication between the second outlet port of the first device and the first inlet port of the adjacent device. The first and second outlet ports of the first head part device are thus placed in sealed liquid communication with the second and first inlet ports of the adjacent head part device, respectively. The head part devices are thus connected in parallel, since liquid that has passed through the liquid treatment cartridge of the first head part device and emerges from the first outlet port is conducted to the second inlet port of the next, downstream head part device to bypass the liquid treatment cartridge of the next head part device and vice versa. By using a different connector with essentially straight flow conductors or differently crossing flow conductors, the same two head part devices can be arranged in series without having to alter their arrangement.

If, on the other hand, both head part devices are arranged such that the first outlet ports of the first head part device lie opposite the second inlet ports of the adjacent head part device and the second outlet ports of the first head part device lie opposite the second inlet ports of the adjacent head part device, then the connector with the first and second flow conductors arranged such that the separated flows of liquid cross each other can be used to provide the series connection. In that case, the connector places the first and second outlet ports of the first head part device in sealed liquid communication with the first and second inlet ports of the adjacent, downstream head part device, respectively. A straight-line connector or a connector with differently arranged crossing liquid flows can be used to provide the parallel connection. There is no need to arrange the head part devices differently for the two configurations.

It is observed that US 4,904,382 discloses a filter head assembly which can be used as a single unit or which may be used as one of a group of units arranged in either parallel or series connections to accommodate a plurality of filter cartridges. The filter assembly includes a head assembly and a filter cartridge. The head assembly includes a manifold member and a slide member, which carries the filter cartridge. The manifold member may be constructed with generally horizontally disposed and substantially parallel main inlet and outlet flow conductors with respective inlet and outlet ports. The flow conductors are continuous through the manifold for parallel hook-ups or they may extend only partially through the manifold with partitions for a single head hook-up or in a series hook-up. The flow conductors may be made straight through flow conductors merely by drilling holes through the partitions.

Parallel hook-up requires drilling through partitions, so that it is not possible to place adjacent devices of the same configuration in either of a series and a parallel arrangement. This drilling is an extra assembly step. Moreover, it is necessary and difficult to keep the heads that have been configured for series hook-up separate from those configured for parallel connection. Once configured for parallel hook-up, a head can no longer be used in a series arrangement.

In an embodiment, the connector inlet and connector outlet ports lie in planes on respective, e.g. opposite, sides of the connector and define apertures in respective exterior surface sections, e.g. sections of respective exterior surfaces of the connector.

This allows the connector to be positioned between the adjacent head part devices by inserting it into a space between the inlet and outlet ports of the head part devices without moving the head part devices. This stands in contrast to assemblies in which one or the other of the head part devices and the connector are provided with nipples to be inserted into ports. Instead, sealing elements may be provided in grooves in the exterior surface section and seal against planar surface sections on the head part devices. Alternatively, the exterior surface sections may lie in the planes. In that case, the head part devices can be provided with sealing elements that seal against the exterior surface section when the connector is inserted into the space defined by the head part devices. The head part devices form a row when placed adjacent each other. Insertion of the connector can be via a straight-line movement in a direction transverse to the direction of the row.

In a variant of this embodiment, the planes are inclined with respect to an axis of the connector corresponding to a direction of insertion of the connector between the head part devices such as to converge towards an axial end of the connector.

This helps prevent dislodgment or wear of the sealing elements sealing the connection between the inlet and outlet ports of the head part devices and the inlet and connector outlet ports when the connector is inserted. Furthermore, such sealing elements may be compressed as the connector reaches its final position, in particular if the inlet and outlet ports of the head part devices are located in correspondingly inclined planes.

In a variant of the embodiment of the connector in which the connector inlet and connector outlet ports lie in planes on respective, e.g. opposite, sides of the connector and define apertures in respective exterior surface sections, e.g. sections of respective exterior surfaces of the connector, the connector has an axis corresponding to a direction of insertion of the connector between the head part devices, and the connector includes a latch device, e.g. forming part of a snap-lock mechanism releasable by manipulating at least one part against an elastic force, for preventing movement in the axial direction.

The latch device prevents movement in axial direction opposite to the direction of insertion. If the latch device is part of a snap-lock mechanism, then it is easy to find the correct axial position of the connector. The snap-lock mechanism is releasable by manipulating at least one part against an elastic force. If the surface sections are inclined with respect to an axis of the connector corresponding to a direction of insertion of the connector between the head part devices such as to converge towards an axial end of the connector, then the latch device ensures that the compressive force on sealing elements compressed as the connector is inserted is maintained. Moreover, in such a situation, the elastic force of the sealing elements would otherwise tend to push the connector out of alignment with the first and second inlet and outlet ports. The latch device helps maintain alignment.

In an embodiment of the connector, one of the first and second flow conductors passes through the other.

The first and second flow conductors need not wind around each other. The flow paths through the connector can be kept relatively straight to reduce the resistance to flow.

In a variant of this embodiment, the connector includes a body having a hollow interior and forming one of the flow conductors, and the connector ports interconnected by the first and second flow conductors are provided in respective wall sections of the body.

This embodiment helps reduce the difference in resistance to flow between the first and second flow conductors. It is also relatively easy to manufacture. The alternative would be to pass one generally cylindrical flow conductor through another, which would form a constriction in the latter and require a relatively complicated joint where the two intersect. The hollow body can be made of multiple parts joined together, e.g. one integrally moulded part including the flow conductor passing through it and a lid to close the hollow interior. The joint between the lid and the integrally moulded part can have a relatively uncomplicated shape.

In an embodiment of the connector, the first and second sub-sets of at least one of the connector inlet ports and the connector outlet ports have different numbers of ports.

This embodiment is useful for connecting e.g. a head part device for receiving a Reverse Osmosis cartridge or other cartridge including a membrane filtration module arranged to be operated in cross-flow mode, which has two cartridge outlet ports and thus requires two first outlet ports to be present in the head part device, to a downstream head part device. It can also be used to connect an upstream head part device to a downstream head part device for receiving a liquid treatment cartridge with an internal bypass. Such a downstream head part device will have two first inlet ports in order to provide separate flows of liquid to be treated. One passes through a certain liquid treatment part in the liquid treatment cartridge that is bypassed partly or entirely by the other flow of liquid.

In a variant of this embodiment, the ports of the sub-set with the larger number of ports are smaller than the ports of the sub-set with the smaller number of ports.

This helps balance the resistance to flow along separate flow paths.

In an embodiment of the connector, the sub-set of inlet ports and the sub-set of outlet ports interconnected by at least one of the flow conductor parts have different numbers of ports.

In this embodiment, a flow of liquid can be split or merged within the connector. Splitting the flow of liquid may be useful if a downstream head part device for receiving a liquid treatment cartridge with an internal bypass is to be supplied with separate sub-flows of liquid to each of at least two first inlet ports.

According to another aspect, in the set of connectors according to the invention for placing adjacent devices in a head part of a liquid treatment apparatus in liquid communication with each other, the head part devices are of the type arranged to receive at least a connecting head of a replaceable liquid treatment cartridge, wherein a first of the head part devices has at least one inlet port, at least one first outlet port and at least one second outlet port, wherein, at least in an operational position of the liquid treatment cartridge, only the first of the first and second outlet ports are in liquid communication with at least one of the inlet ports via the liquid treatment cartridge and the second outlet ports are in liquid communication with at least one of the inlet ports, wherein a second of the head part devices has at least one first inlet port, at least one second inlet port and at least one outlet port, wherein, at least in an operational position of the liquid treatment cartridge, only the first of the first and second inlet ports are in liquid communication with at least one of the outlet ports via the liquid treatment cartridge and the second inlet ports are in liquid communication with at least one of the outlet ports, wherein a first connector is positionable with respect to the head part devices such as to place the first and second outlet ports of the first head part device in sealed liquid communication with the second and first inlet ports of the second head part device, respectively, and a second connector is positionable with respect to the head part devices such as to place at least the first outlet ports of the first head part device in sealed liquid communication with the first inlet ports of the second head part device, wherein each connector has at least two connector inlet ports and at least two connector outlet ports, wherein each connector includes a first flow conductor interconnecting a first sub-set of the connector inlet ports and a first sub-set of the connector outlet ports, and wherein each connector includes a second flow conductor interconnecting a second sub-set of the connector inlet ports and a second sub-set of the connector outlet ports, wherein flows of liquid through one of the first and second flow conductors are kept separate from those through the other by at least one of the first and second flow conductors, and wherein at least one of the first and second connectors is a connector according to the invention.

In an embodiment of the set, the first and second flow conductors of one of the first and second connectors are arranged such that the separated flows of liquid cross each other, and the first and second flow conductors of the other of the first and second connectors extend essentially parallel to each other.

In this embodiment, the outlet ports of one head part device can be aligned with the inlet ports of the other head part device. One of the two connectors is suitable for establishing a parallel connection. The other is suitable for connecting the head part devices in series. With the inlet and outlet ports of each head part device also aligned, the head part devices can be interchangeable. Furthermore the flow paths through the head part devices can be relatively straight, thus keeping the resistance to flow low. At least the connector with the parallel first and second flow conductors can have flow conductors that extend in essentially straight lines and thus also have a low resistance to flow.

In an embodiment of the set, at least one of (i) the connector inlet ports and (ii) the connector outlet ports of each connector are at least three in number.

This embodiment allows the connectors to be used to interconnect head part devices with two first outlet ports and/or two first inlet ports. There will be more than one flow of liquid to or from the cartridge in case of cartridges including a membrane filtration module operated in cross-flow mode or in case of cartridges including an internal bypass in which the incoming flow of liquid is not split within the cartridge.

In an embodiment of the set, the first connector has a lower number of connector inlet ports than the second connector.

The first connector is for establishing a parallel arrangement of head part devices. It may merge the outflows of the upstream head part device to provide one flow of liquid to the second inlet port of the downstream head part device. This is the port that provides access to a bypass around any inserted cartridge. At least one of the first connector inlet ports may be large enough to encompass an area covered by multiple connector inlet ports of the second connector.

In an embodiment of the set, the second connector defines at least three flow conductors, each interconnecting a respective one of disjoint sub-sets of the connector inlet ports with a respective one of disjoint sub-sets of the connector outlet ports.

This embodiment allows for series connection of head part devices having at least three inlet ports and at least three outlet ports.

According to another aspect, the head part of a liquid treatment apparatus according to the invention includes:
at least two adjacent head part devices,
wherein each head part device is arranged to receive at least a connecting head of a replaceable liquid treatment cartridge,
wherein a first of the head part devices has at least one inlet port, at least one first outlet port and at least one second outlet port,
wherein, at least in an operational position of the liquid treatment cartridge, only the first of the first and second outlet ports are in liquid communication with at least one of the inlet ports via the liquid treatment cartridge and the second outlet ports are in liquid communication with at least one of the inlet ports,
wherein a second of the head part devices has at least one first inlet port, at least one second inlet port and at least one outlet port,
wherein, at least in an operational position of the liquid treatment cartridge, only the first of the first and second inlet ports are in liquid communication with at least one of the outlet ports via the liquid treatment cartridge and the second inlet ports are in liquid communication with at least one of the outlet ports; and,
a connector according to the invention,
wherein the connector is one of (i) arranged to place the first and second outlet ports of the first of the head part devices in sealed liquid communication with the second and first inlet ports, respectively, and (ii) arranged to place the first and second outlet ports of the first head part device in sealed liquid communication with the first and second inlet ports, respectively, of the second head part device.

The connector may be one of a set according to the invention for placing the head part devices in a series or parallel arrangement according to the selected connector.

In an embodiment of the head part, the inlet ports of the first head part device include at least one first inlet port and at least one second inlet port, the outlet ports of the second head part device include at least one first outlet port and at least one second outlet port, and positions of the first and second inlet ports relative to those of the first and second outlet ports are the same for each of the first and second head part devices.

As far as their interfaces for placing them in liquid communication with other devices are concerned, the head part devices are thus essentially identical. This embodiment may be part of a modular system in which two or more head part devices can be arranged in a row to form a head part for receiving a corresponding number of liquid treatment cartridges. Only a limited number of connector configurations need be provided to interconnect the head part devices.

In an embodiment of the head part each head part device includes a mechanism for locking the liquid treatment cartridge to the head part device in the operational position of the liquid treatment cartridge, wherein the mechanism is arranged to allow insertion and retraction of at least a part of a connecting head of the liquid treatment cartridge into and out of a first position in the head part device and movement of the inserted part between the first and a second position corresponding to the operational position whilst inserted, and wherein the movement includes at least an intrinsic rotation in a plane parallel to the direction of insertion into the first position.

Compared to a bayonet or screw-fit connection between the cartridge and the head part, the proposed type of connection is less cumbersome and requires relatively little force. The direction of insertion is aligned with an axis, commonly the longitudinal axis of the cartridge housing. Rotation in a plane thus implies that the cartridge is swivelled and functions as a lever to operate the locking mechanism. With the head part mounted to a wall or the like, there is generally only space for the cartridge to swing to one side of the head part device. Thus, the head part devices should not be rotated by 180° to change from a parallel to a series connection. The head part devices should instead all be oriented in the same way. With the connector according to the invention, establishing a series or parallel connection is a matter of choosing the right connector.

In a variant of this embodiment, the head part devices are arranged to form a row, and the plane of movement is perpendicular to a direction of the row.

In this embodiment, the cartridges can be swung into place in the row, with each depending from one of the head part devices, for example.

In a particular variant hereof, the movement further includes a component corresponding to a displacement relative to a main part of the head part device, e.g. a displacement predominantly transverse to a plane in which the liquid treatment cartridges lie in the second position.

This allows the distal end of a cartridge to move further out of the row for a given angle of rotation. This angle of rotation can thus be reduced. The distal end of the cartridge need then not be lifted up so far in order to release the cartridge

In an embodiment of the head part, each head part device includes a receiving part including at least one cavity for receiving at least part of the inserted part of the connecting head provided with at least one cartridge port, such that the at least one cartridge ports are in sealed liquid communication with respective ports of the receiving part, and the receiving part is journalled for movement with respect to a main part of the head part device, e.g. a housing of the head part device, with the inserted part of the connecting head between the first and the second positions.

The receiving part thus guides the movement of at least the connecting head of the cartridge.

In an embodiment of the head part each head part device includes: a receiving part including at least one cavity for receiving at least a part of the connecting head of the liquid treatment cartridge including at least one cartridge port such that the at least one cartridge ports are in sealed liquid communication with respective receiving part ports; and at least one of:
(i) at least one valve mechanism, operable by the liquid treatment cartridge, for interrupting flows of liquid between the first inlet ports and respective ones of the receiving part ports; and
(ii) at least one valve mechanism, operable by the liquid treatment cartridge, for interrupting flows of liquid between the first outlet ports and respective ones of the receiving part ports.

This embodiment allows one to replace or even remove a cartridge from a head part device arranged in parallel with another head part device in the head part without disrupting the operation of the cartridge in the head part device in the parallel branch. This is achievable without separately having to interrupt connections to and/or from the head part device from which the cartridge is removed.

In an embodiment combining the preceding two variants, the receiving part is arranged to function as a movable member of the valve mechanism such that at least two, e.g. all of valve mechanism ports of the receiving part that are at least in liquid communication with the receiving part ports are aligned in the second position with respective valve mechanism ports of the main part that are at least placeable in liquid communication with one of the first inlet ports and the first outlet ports, and the valve mechanism ports of at least one of the receiving part and the main part are blocked by respective wall sections of the other of the receiving part and the main part in the first position.

This is a relatively compact arrangement with relatively few parts. The valve mechanism ports of the main part are at least placeable in liquid communication with one of the first inlet ports and the first outlet ports, meaning they are either in direct liquid communication or can be placed in liquid communication if valves are set appropriately. The valve mechanism ports of the receiving part that are at least in liquid communication with the receiving part ports either correspond to the receiving part ports or they are in liquid communication therewith via respective channels or conduits.

In a variant of this embodiment, at least one channel is formed in the receiving part, and the channel is arranged, in at least the first position, to place at least one of the valve mechanism ports of the main part aligned with a respective valve mechanism port of the receiving part in the second position in sealed liquid communication with at least one other of the valve mechanism ports of the main part aligned with a respective valve mechanism port of the receiving part in the second position.

Thus, if the liquid treatment cartridge is removed, the flow of liquid through the valve mechanism ports of the main part is not blocked but conducted through the channel in the receiving part. If the head part devices are arranged in series, for example, then it is possible to remove a cartridge from one of them without interrupting the flow of liquid through the other. One stage in a multi-stage treatment is simply dropped. If that stage is not required or the appropriate cartridge is temporarily unavailable, then the liquid treatment apparatus can continue to operate without having to remove a head part device.

In a variant of this embodiment, the channel is arranged to maintain liquid communication between a valve mechanism port of the main part at least placeable in liquid communication with the second inlet port and a valve mechanism port of the main part at least placeable in liquid communication with the second outlet port in and between both the first and the second position.

This makes the head part device relatively compact. There is no need to form separate channels in the main part. Instead, the flow of liquid between the second inlet port and the second outlet port is also through the receiving part. It is maintained in all positions of the receiving part. The channel may be configured further to place valve mechanism ports of the main part at least placeable in liquid communication with the first inlet ports in liquid communication with valve mechanism ports of the main part at least placeable in liquid communication with the first outlet ports in only the first of the first and second positions. In that case, all liquid flow between the inlet ports and outlet ports is through the channel in the first position, the position in which the connecting head part is insertable and retractable.

In an embodiment of the head part, each head part device includes a receiving part including a cavity for receiving at least part of a connecting head of the replaceable liquid treatment cartridge including at least one cartridge port such that the at least one cartridge ports are in liquid communication with respective ports of the receiving part, and the receiving part ports are in respective side wall sections at least partly delimiting the cavity laterally.

Each receiving part port is at least placeable in liquid communication with a respective one of the first and second inlet and outlet ports. It is either in liquid communication with a respective one of the first and second inlet and outlet ports or placeable in liquid communication by setting one or more valves appropriately. Because the receiving part ports are in respective side wall sections at least partly delimiting the cavity laterally, the height of the head part device can be kept relatively low. Moreover, the liquid treatment apparatus can be arranged such that, in the operative positions of the liquid treatment cartridges, the flow of liquid is in a relatively straight line in the direction of the row in which the head part devices are arranged. The vertical components of the flow direction are, at least in the head part devices, relatively small.

In a variant of this embodiment, the cavity tapers in a direction of insertion.

If the receiving part ports are in respective side wall sections at least partly delimiting the cavity laterally, either they or corresponding cartridge ports aligned with them when the connecting head has been inserted will be surrounded by sealing elements. The taper helps press the sealing elements against co-operating surface sections when the connecting head is close to its final position and helps prevent damage to or wear of the sealing elements when the connecting head has just been inserted and is further away from its final position.

In an embodiment in which each head part device includes a receiving part including a cavity for receiving at least part of a connecting head of the replaceable liquid treatment cartridge including at least one cartridge port such that the at least one cartridge ports are in liquid communication with respective ports of the receiving part, and the receiving part ports are in respective side wall sections at least partly delimiting the cavity laterally, the cavity is rotationally asymmetric with respect to a central axis aligned with the direction of insertion of the connecting head part.

This may help ensure that the direction of flow is the correct one. The rotational asymmetry prevents insertion of the cartridge when rotated over an angle of 180° with respect to the correct orientation about a cartridge axis aligned with the direction of insertion.

In an embodiment of the head part, the head part devices are connected to define a space, and the connector is insertable and retractable from the space defined by the head part devices.

This allows the determination of whether the head part devices are to be connected in parallel or in series to be made after the head part devices have been mounted in their operative positions in an assembly for forming the head part. They, or at least components of their housings, may even be integral to a single part. The first and second inlet and outlet ports face into the space. They are brought into alignment with the inlet and connector outlet ports merely by inserting the connector into the space.

In a variant of this embodiment, at least one of the head part devices, e.g. both of the head part devices, includes at least one part defining a support surface for supporting the connector facing at least partly in a direction opposite to the direction of insertion into the space.

This ensures correct alignment between the first and second outlet ports of the adjacent head part devices on the one hand and the inlet and connector outlet ports on the other hand. The connector cannot be inserted too far into the space.

In a variant of the head part, in which the head part devices are connected to define a space, and the connector is insertable and retractable from the space defined by the head part devices, the head part further includes at least one releasable locking mechanism for preventing movement of the connector out of the space in a direction of retraction.

This ensures that the connector is inserted far enough into the space to ensure correct alignment between the first and second outlet ports of the adjacent head part devices on the one hand and the inlet and connector outlet ports on the other hand. It cannot be dislodged during use. It can also be held with a certain tension against a support surface for supporting the connector facing at least partly in a direction opposite to the direction of insertion into the space. Any sealing elements in a plane at a slight angle to the direction of insertion can be compressed and held in a compressed state.

In an embodiment, in which the head part devices are connected to define a space, and the connector is insertable and retractable from the space defined by the head part devices, the first and second inlet ports of one of the head part devices face into the space and include apertures located in a common plane, and the first and second outlet ports of the other of the head part devices face into the space and include apertures located in a common plane.

The planes may be parallel to or at a relatively small angle to the direction of insertion. In the latter case, they would face slightly in a direction opposite to the direction of insertion. The connector inlet ports will also be located in a common plane, as will the connector outlet ports of compatible connectors. These planes are essentially parallel to the planes in which the inlet ports and outlet ports of the head part devices are located when the connector is inserted into the space. Insertion of the connector will thus place the connector inlet ports in liquid communication with the outlet ports of one of the head part devices and the connector outlet ports with the inlet ports of the other of the head part devices.

In a variant of this embodiment, the planes are inclined with respect to a central axis of the space aligned with the direction of insertion and retraction such that the planes converge in the direction of insertion.

At least one of the connector and the head part devices may be provided with sealing elements, in particular compressible sealing elements, surrounding the connector ports or the first and second inlet and outlet ports respectively. If the planes are inclined, insertion of the connector will cause the sealing elements to be compressed.

An embodiment of the head part further includes at least one mounting plate for mounting the head part to a wall.

The head part may thus be of the type arranged for the liquid treatment cartridges to be suspended from the head part devices in their operative positions. With sufficient clearance, any of a range of cartridges with different lengths can thus be inserted, since they need not be placed on the ground. Because the head part devices need not be rotated to change between a parallel and a series arrangement, they need only be attachable or attached to the mounting plate on one side.

In an embodiment of the head part, the head part devices are connected to each other, e.g. via fasteners.

Because the head part devices are connected to each other rather than to a common further part, their distance is relatively well-defined. This makes it easier to ensure that the connector is inserted into the head part without any gaps and held against the head part devices sufficiently firmly. The head part devices are connected to each other to form a unit. There is no need to support them by means of a further bracket, frame or the like.

According to another aspect, the liquid treatment apparatus according to the invention includes a head part according to the invention and at least one replaceable liquid treatment cartridge.

Each liquid treatment cartridge is for insertion into a respective one of the head part devices. There may be fewer cartridges than head part devices in certain embodiments, e.g. because one of parallel branches created by the connector is not used or because one of the head part devices includes a valve mechanism that allows liquid to flow through it even in the absence of a liquid treatment cartridge.

In an embodiment, at least three, e.g. at least four, cartridge ports are provided in the connecting head of at least one, e.g. each, of the at least one liquid treatment cartridges.

With at least three ports, all ports for implementing a liquid treatment cartridge with an internal bypass or a cartridge with a membrane filtration module operable in cross-flow mode are provided at one end of the liquid treatment cartridge. This is the end for insertion into a head part device. Connections at an opposite end of the liquid treatment cartridge are not required. With at least four ports, the rate of flow through the cartridge is less likely to be restricted, because there can be an equal number of inlet and outlet ports.

In an embodiment of the liquid treatment apparatus, at least one of the at least one liquid treatment cartridges:
is provided with at least three cartridge ports in liquid communication with an interior of the liquid treatment cartridge, e.g. provided in the connecting head;
includes at least one certain liquid treatment part; and
is arranged to conduct liquid conducted into the liquid treatment cartridge through a first of the cartridge ports through the certain liquid treatment part and liquid conducted into the liquid treatment cartridge through a second of the cartridge ports along a flow path through the liquid treatment cartridge that bypasses at least part of the certain liquid treatment part.

With this liquid treatment cartridge, a mix of liquid treated to an extent determined by the volumetric flow rate ratio of the flows conducted through the first and second cartridge inlet ports can be provided. The flows may be mixed in the liquid treatment cartridge downstream of the certain liquid treatment part.

In a variant of this embodiment, the at least one certain liquid treatment part includes a liquid treatment medium for the treatment of aqueous liquids by ion exchange, e.g. at least one type of cation exchange resin, for example cation exchange resin in the hydrogen form.

In this variant, the mix of liquid can have a desired mineral content, hardness or, in the case of cation exchange resin in the hydrogen form, carbonate hardness.

In an embodiment of the liquid treatment apparatus, at least one of the at least one liquid treatment cartridges:
is provided with at least three cartridge ports in liquid communication with an interior of the liquid treatment cartridge;
includes at least a membrane module arranged to operate in cross-flow mode; and
is arranged to conduct filtrate out of the liquid treatment cartridge through one of the cartridge ports and retentate out of the liquid treatment cartridge through another of the cartridge ports.

This embodiment allows both filtrate and retentate to be conducted through one head part device.

In an embodiment of the liquid treatment apparatus, wherein the liquid treatment cartridge has a cartridge axis essentially aligned with the direction of insertion of the connecting head into a head part device, at least one, e.g. all, of the cartridge ports provided in the connecting head is provided in a respective surface section facing in a direction at an angle to the cartridge axis, e.g. an angle larger than 45°.

The cartridge ports are thus in lateral surfaces of the connecting head. Generally, the head part devices will be provided in a row, with the cartridges depending from them in their operational positions. The cartridge ports of this embodiment can be arranged to be at the same height as the inlet and outlet ports of the head part devices, so that the latter can have a relatively low height.

In an embodiment of the liquid treatment apparatus, at least one cartridge inlet port is aligned with a cartridge outlet port on an opposite side of the connecting head.

This further reduces the dimensions of the head part devices, as well as potentially reducing the resistance to flow. The flow of liquid can be in an essentially straight line from an inlet port of the head part device to and through a cartridge inlet port, then forced to change direction within the cartridge, emerge again from the cartridge through a cartridge outlet port aligned with the cartridge inlet port and proceed along the same straight line through an outlet port of the head part device. With minimal changes in the direction of flow in the connector interconnecting the head part device and a next head part device, the overall resistance to flow of the liquid treatment apparatus can be kept relatively low. It may be sufficient to treat mains water at the pressure at which it is delivered to a point of use.

In an embodiment of the liquid treatment apparatus, wherein the liquid treatment cartridge has a cartridge axis essentially aligned with the direction of insertion of the connecting head into a head part device, the liquid treatment cartridge includes at least one laterally protruding part for support by a respective support surface of any of the head part devices.

The liquid treatment cartridge can thus be locked to the head part device when in its operational position.

According to another aspect, in the method according to the invention of placing adjacent devices in a head part of a liquid treatment apparatus, e.g. a head part according to the invention, in liquid communication with each other, the head part devices are of the type arranged to receive at least a connecting head of a replaceable liquid treatment cartridge, wherein a first of the head part devices has at least one inlet port, at least one first outlet port and at least one second outlet port, wherein, at least in an operational position of the liquid treatment cartridge, only the first of the first and second outlet ports are in liquid communication with at least one of the inlet ports via the liquid treatment cartridge and the second outlet ports are in liquid communication with at least one of the inlet ports, wherein a second of the head part devices has at least one first inlet port, at least one second inlet port and at least one outlet port, wherein, at least in an operational position of the liquid treatment cartridge, only the first of the first and second inlet ports are in liquid communication with at least one of the outlet ports via the liquid treatment cartridge and the second inlet ports are in liquid communication with at least one of the outlet ports, and wherein the method includes selecting one of the first and second connectors of a set of connectors according to the invention.

In an embodiment, the connector is selected from amongst at least two different connectors arranged to place the head part devices in a series and a parallel flow circuit, respectively.

In an embodiment of the method, the liquid treatment apparatus is a liquid treatment apparatus according to the invention.

The invention will be explained in further detail with reference to the accompanying drawings, in which:
- Fig. 1: is a perspective view of a liquid treatment apparatus including a head part comprising two head part devices for receiving replaceable liquid treatment cartridges, which head part devices are connectable in series or in parallel according to which connector from a set of two connectors is inserted between them;
- Fig. 2: is a perspective view of a housing part of a left head part device in the head part;
- Fig. 3: is a perspective view of a housing part of a right head part device to which the head part device of Fig. 2 is connected to assemble the head part;
- Fig. 4: is a perspective view of a first of the two connectors;
- Fig. 5: is a first side view of the first connector;
- Fig. 6: is a plan view of an opposite side of the first connector to the one depicted in Fig. 5;
- Fig. 7: is a first-cross-sectional view of the first connector;
- Fig. 8: is a second cross-sectional view of the first connector;
- Fig. 9: is a first perspective view of the second connector;
- Fig. 10: is a side view of the second connector;
- Fig. 11: is a plan view of an opposite side of the second connector to the one depicted in Fig. 10;
- Fig. 12: is a second perspective view of the second connector;
- Fig. 13: is a third perspective view of the second connector;
- Fig. 14: is a perspective view of a liquid treatment cartridge for the liquid treatment apparatus of Fig. 1;
- Fig. 15: is a first side view of a cap-shaped part of the liquid treatment cartridge of Fig. 14;
- Fig. 16: is a plan view of an opposite side of the cap-shaped part to the one shown in Fig. 15;
- Fig. 17: is a cross-sectional view of the cap-shaped part of Figs. 14 and 15;
- Fig. 18: is a simplified cross-sectional view of a vessel of the liquid treatment cartridge of Figs. 14-17;
- Fig. 19: is a first perspective view of one of the two head part devices with part of the housing removed;
- Fig. 20: is a perspective view of a latching device arranged inside the head part device of Fig. 19;
- Fig. 21: is a first perspective view of a receiving part forming part of the head part device of Fig. 19;
- Fig. 22: is a second perspective view of the receiving part of Fig. 21;
- Fig. 23: is a perspective view of the receiving part of Figs. 21 and 22 from below;
- Fig. 24: is a further perspective view of the receiving part of Figs. 21-23 from below;
- Fig. 25: is a side view of a second housing part of the left head part device of the head part;
- Fig. 26: is a side view of a second housing part of the right head part device of the head part;
- Fig. 27: is an inside view of the housing part of Fig. 3 corresponding to an inside view of the housing part of Fig. 25;
- Fig. 28: is an inside view of the housing part of Fig. 26, corresponding to an inside view of the housing part of Fig. 2;
- Fig. 29: is a side view of the inside of the housing part of Fig. 27 with the receiving part of Figs. 21-24 in a first position; and
- Fig. 30: is a view corresponding to that of Fig. 29, but with the receiving part in a second position.

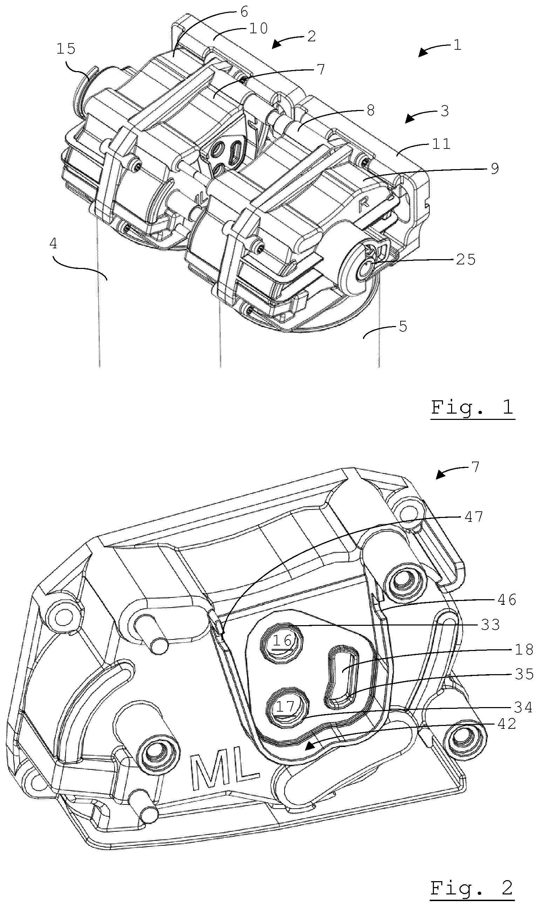

In the following, a liquid treatment apparatus (Fig. 1) for the treatment of aqueous liquids such as drinking water will be described. The liquid treatment apparatus includes a head part 1 including two head part devices 2,3 arranged in a row. The apparatus further includes two liquid treatment cartridges 4,5, each inserted into a respective one of the head part devices 2,3. A left head part device 2 includes left and right housing parts 6,7, joined together to form a housing. A right head part device 3 includes left and right housing parts 8,9 joined together to form a housing. Left and right mounting plates 10,11 are provided for mounting the head part to a wall.

The right housing parts 7,9 are identical to each other on the inside, just as the left housing parts 6,8 are identical to each other on the inside. They differ on the outside, however. The left housing part 8 of the right head part device 3 faces the right housing part 7 of the left head part device 2. Together they define a space for receiving a connector, as will be explained. By contrast, the left housing part 6 of the left head part device 2 and the right housing part 9 of the right head part device 3 face outwards at ends of the row in which the head part devices 2,3 are arranged. They are each other's mirror image, as far as their exterior is concerned. It is noted that, in a variant of the head part 1 including three or more head part devices the head part devices in between the head part devices at the ends of the row in which they are arranged would each have a housing formed by a left housing part identical to the left housing part 8 of the right head part device 3 and a right housing part identical to the right housing part 7 of the left head part device 2.

To simplify, it will be assumed that the flow of liquid through the liquid treatment apparatus is from the left head part device 2 to the right head part device 3. The flow may, however, be reversed.

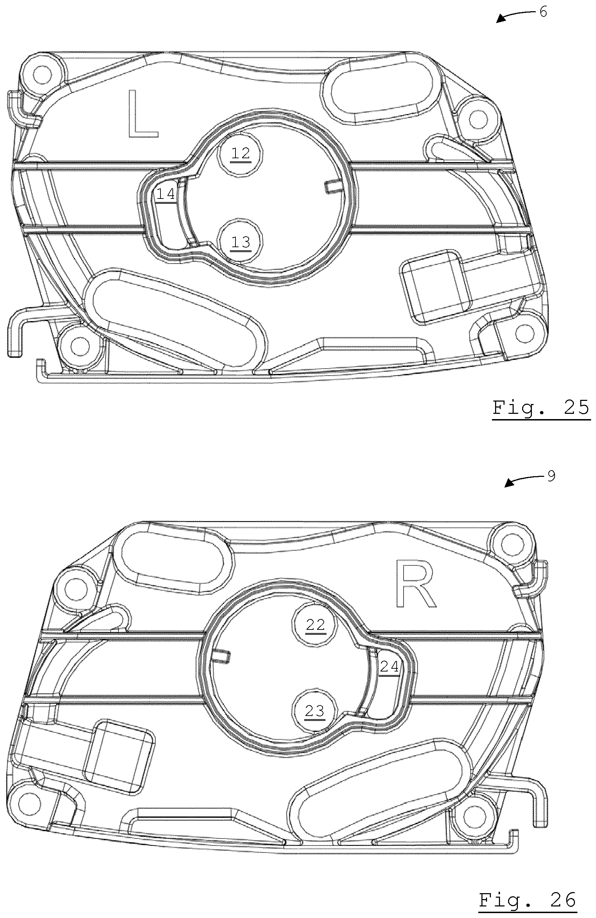

On this assumption, the left housing part 6 of the left head part device 2 (Fig. 25) has upper and lower first inlet ports 12,13 and a second inlet port 14 defined therein. An inlet connector 15 (Fig. 1) allows liquid to be treated to be supplied to the inlet ports 12-14. The right housing part 7 of the left head part device 2 (Fig. 2) defines upper and lower first outlet ports 16,17 and one second outlet port 18. These also form outlet ports of the left head part device 2 overall.

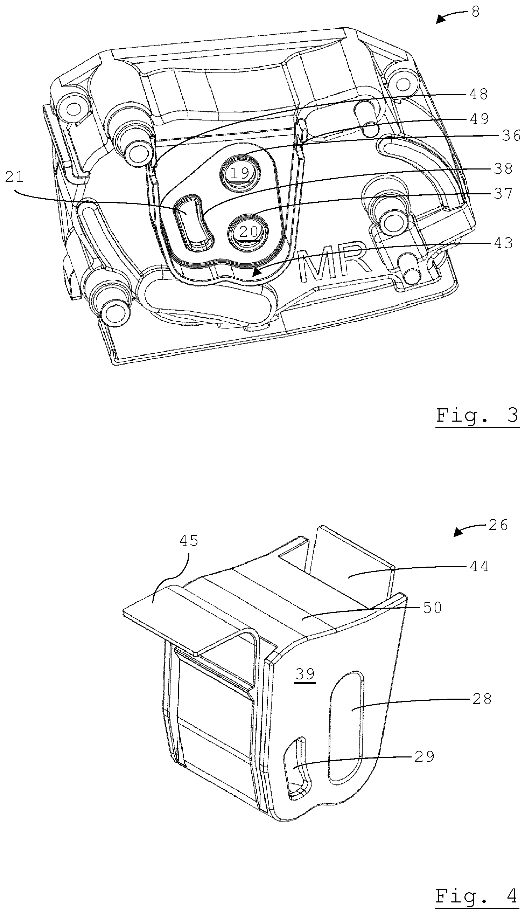

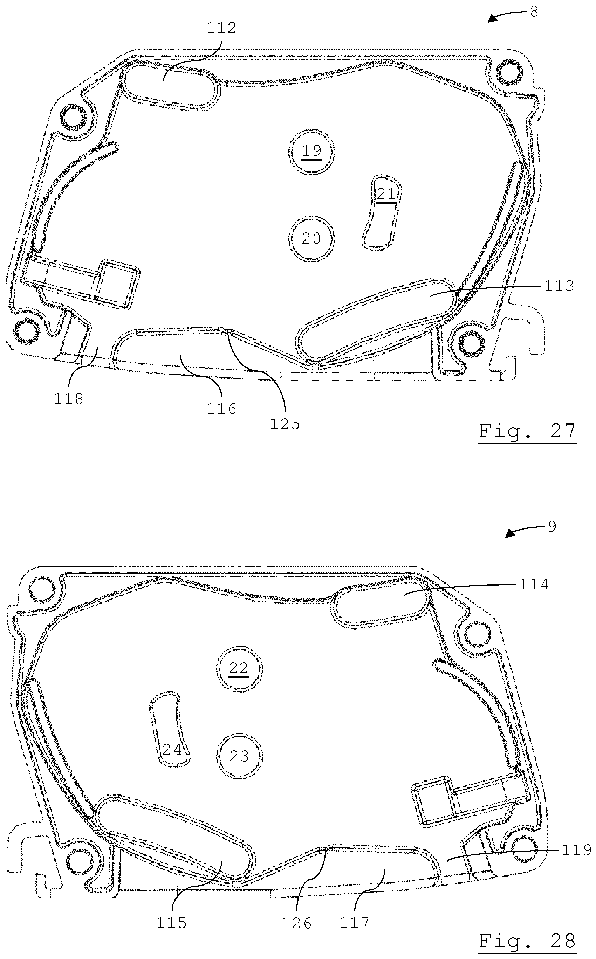

The left housing part 8 of the right head part device 3 (Figs. 3,27) has upper and lower first inlet ports 19,20 and a second inlet port 21 defined therein. These also form inlet ports of the right head part device 3 overall. The right housing part 9 of the right head part device 3 (Figs. 26,28) defines upper and lower first outlet ports 22,23 and one second outlet port 24. An outlet connector 25 (Fig. 1) allows the outlet ports 22-24 to be connected to a conduit (not shown). Depending on the type of the outlet connector 25, the first outlet ports 22,23 on the one hand and the second outlet port 24 on the other may be connectable to separate conduits.

The cartridges 4,5 are shown in their operational positions, in which they are aligned in a row and suspended from the head part devices 2,3, which support them. In these positions, the first inlet ports 12,13 of the left head part device 2 are in liquid communication with only the first outlet ports 16,17 and vice versa via the cartridge 4. The second inlet port 14 of the left head part device 2 is in liquid communication with only the second outlet port 18, but not via the cartridge 4. The same holds true for the first inlet and outlet ports 19,20,22,23 and for second inlet and outlet ports 21,24 of the right head part device 3.

First and second connectors 26,27 are provided for connecting the outlet ports 16-18 of the left head part device 2 to the inlet ports 19-21 of the right head part device 3.

The first connector 26 places the head part devices 2,3 in a parallel arrangement. In this arrangement, some of the liquid passing through the liquid treatment apparatus is only treated in the liquid treatment cartridge 4 inserted in the left head part device 2 and some of the liquid passing through the liquid treatment apparatus is only treated in the liquid treatment cartridge 5 in the right head part device 3 (some of the liquid may not be treated at all). The types of treatment may be the same, depending on the configurations of the liquid treatment cartridges 4,5.

The second connector 27 places the head part devices 2,3 in a series arrangement, so that at least some of the liquid passing through the liquid treatment apparatus is conducted through both cartridges 4,5. The types of treatment will generally differ in this case.

Which one of the first and second connectors 26,27 is selected accordingly depends on whether a parallel flow circuit or a series flow circuit is desired.

The first connector 26 (Figs. 4-8) has first and second connector inlet ports 28,29. It has upper and lower first connector outlet ports 30,31 and one second connector outlet port 32.

When the first connector 26 is correctly positioned between the left and right head part devices 2,3, the first connector inlet port 28 is in a position of overlap with the upper and lower first outlet ports 16,17 and the second connector inlet port 29 is a in a position of overlap with only the second outlet port 18 of the left head part device 2. The upper and lower first connector outlet ports 30,31 are in a position of overlap with only the upper and lower first inlet ports 19,20 of the right head part device, respectively. The second connector outlet port 32 is in a position of overlap with only the second inlet port 21 of the right head part device 3.

Each of the first and second outlet ports 16-18 of the left head part device 2 and each of the first and second inlet ports 19-21 of the right head part device 3 is surrounded by a respective sealing ridge 33-38 (Figs. 2-3). When the first connector 26 is correctly positioned between the left and right head part devices 2,3, the sealing ridges 33-35 of the left head part device 2 are pressed against a left-facing surface 39 of the first connector 26. The sealing ridges 36-38 of the right head part device 3 are pressed against a right-facing surface 40 of the first connector. The flows of liquid into the first connector 26 are thus isolated from each other, just as the flows of liquid out of the first connector 26 are isolated from each other. The left- and right-facing first connector surfaces 39,40 are planar to provide uniform sealing.

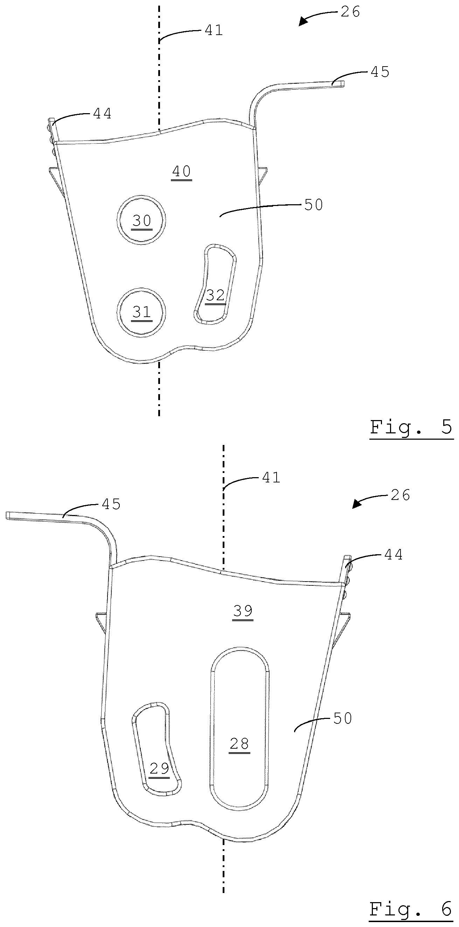

It is possible to define a first connector axis 41 (Figs. 5-6) corresponding to a direction of insertion of the first connector 26 into the space defined between the left and right head part devices 2,3. The first connector surfaces 39,40 are exterior surfaces on opposite sides of the first connector 26. They do not, however, face exactly in opposite directions. Rather, they are at a slight angle to each other. The effect is that they are inclined with respect to the first connector axis 41 such as to converge towards an axial end of the first connector 26 a direction of insertion into the space, which is the leading axial end in the direction of insertion. There is sealed liquid communication only between overlapping ports. The sealing ridges 33-35 of the left head part device 2 and the sealing ridges 36-38 of the right head part device 3 lie in respective planes that are similarly inclined, so that axial movement of the first connector 26 into the space translates into a force pressing the sealing ridges 33-38 against the first connector surfaces 39,40.

When correctly positioned, the first connector 26 is supported in axial direction by left and right connector support surfaces 42,43 (Figs. 2-3) provided on the right housing part 7 and the left housing part 8 of the left and right head part devices 2,3, respectively.

These limit axial movement of the first connector 26 in the direction of insertion. Front and rear resilient latching arms 44,45 snap into a locking position in openings 46-49 in sections of the left and right connector support surfaces 42,43 that extend mainly in axial direction. The lock is releasable by pulling ends of the resilient latching arms 44,45 towards each other to disengage them from the support surface openings 46,48 against the elastic forces tending to move the ends of the latching arms 44,45 away from each other. The latching mechanism formed by the latching arms 44,45 and support surface openings 46-49 prevents axial movement of the first connector 26 in a direction opposite to the direction of insertion. It also holds the sealing ridges 33-38 pressed against the first connector surfaces 39,40.

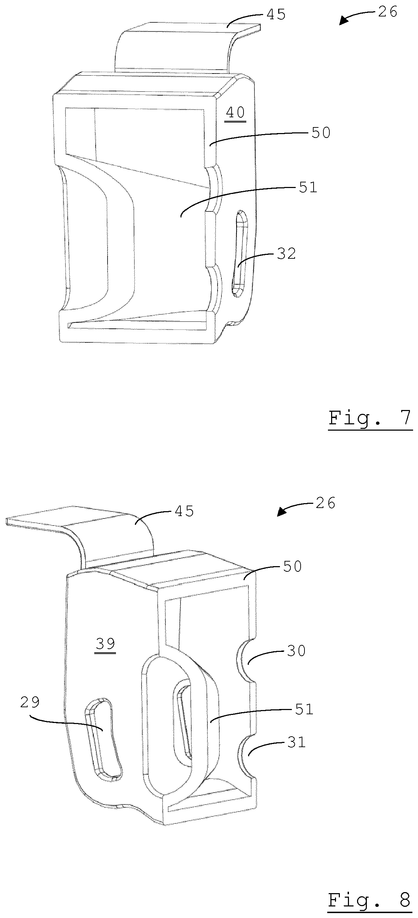

The resilient latching arms 44,45 are integral parts of a body 50 of the first connector 26 that is hollow and forms a first flow conductor that places the second connector inlet port 29 in liquid communication with the first connector outlet ports 30,31. A second flow conductor 51 (Figs. 7-8) passes through the hollow interior of the body 50 and interconnects the first connector inlet port 28 with the second connector outlet port 32. The flow of liquid between the first connector inlet port 28 and the second connector outlet port 32 thus crosses the flows of liquid between the second connector inlet port 29 and the first connector outlet ports 30,31 without intersecting them.

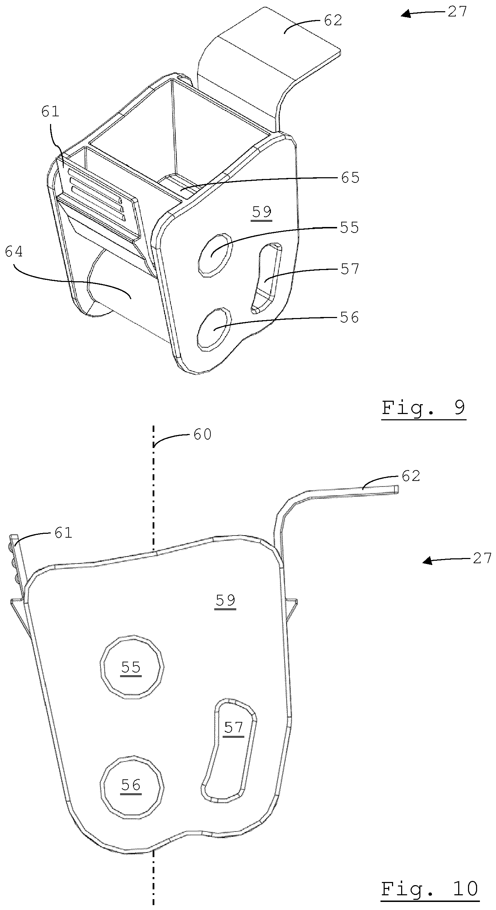

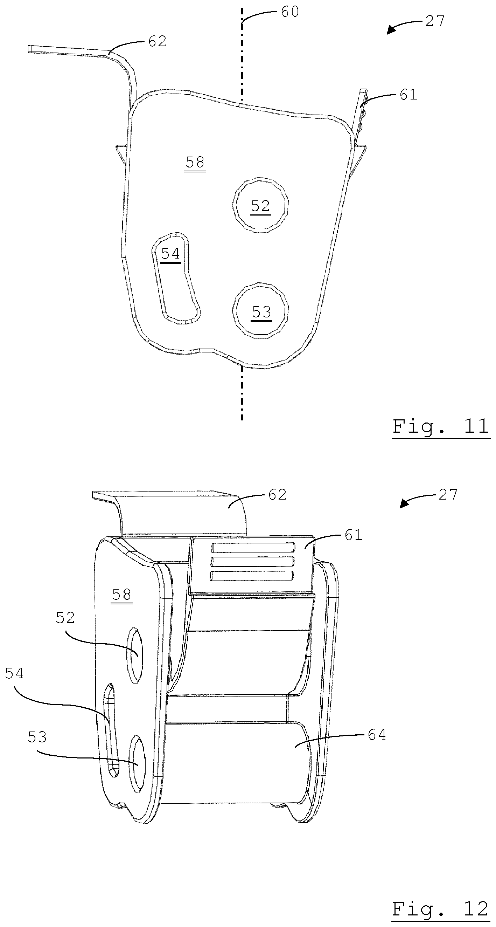

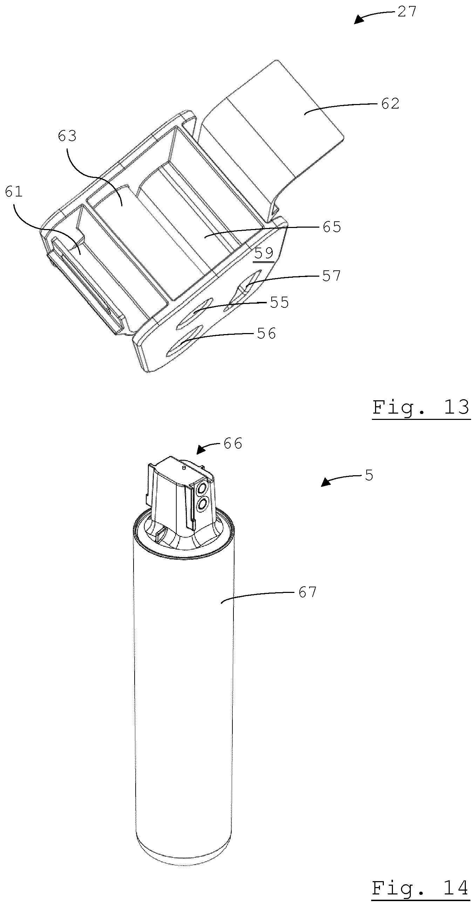

The second connector 27 (Figs. 9-13) has upper and lower first connector inlet ports 52,53 and a second connector inlet port 54 (Fig. 11). It also has upper and lower first connector outlet ports 55,56 and one second connector outlet port 57 (Figs. 9-10).

When the second connector 26 is correctly positioned between the left and right head part devices 2,3, the upper and lower first connector inlet ports 52,53 are in positions of overlap with the upper and lower first outlet ports 16,17, respectively, and the second connector inlet port 54 is in a position of overlap with only the second outlet port 18 of the left head part device 2. The upper and lower first connector outlet ports 55,56 are in a position of overlap with only the upper and lower first inlet ports 19,20 of the right head part device, respectively. The second connector outlet port 57 is in a position of overlap with only the second inlet port 21 of the right head part device 3.

When the second connector 27 is correctly positioned between the left and right head part devices 2,3, the sealing ridges 33-35 of the left head part device 2 are pressed against a left-facing surface 58 of the second connector 27. The sealing ridges 36-38 of the right head part device 3 are pressed against a right-facing surface 59 of the second connector 27. The flows of liquid into the second connector 27 are thus isolated from each other, just as the flows of liquid out of the second connector 27 are isolated from each other. The left- and right-facing connector surfaces 58,59 are planar to provide uniform sealing.

It is possible to define a second connector axis 60 (Figs. 10-11) corresponding to a direction of insertion of the second connector 27 into the space defined between the left and right head part devices 2,3. The second connector surfaces 58,59 are exterior surfaces on opposite sides of the second connector 27. They are inclined with respect to the second connector axis 60 such as to converge towards an axial end of the second connector 27, which is the leading axial end in the direction of insertion. The angles of inclination of the second connector surfaces 58,59 correspond to those of the first connector surfaces 39,40.

When correctly positioned, the second connector 27 is supported in axial direction by the left and right connector support surfaces 42,43. Front and rear resilient latching arms 61,62 snap into a locking position in the support surface openings 46-49. The lock is releasable by pulling ends of the resilient latching arms 61,62 towards each other to disengage them from the support surface openings 46-49 against the elastic forces tending to move the ends of the latching arms 61,62 away from each other. The latching mechanism formed by the latching arms 61,62 and support surface openings 46-49 operates to fulfil the same function as that of the first connector 26.

The second connector 27 includes first to third flow conductors 63-65 (Figs. 9,12,13). In the illustrated embodiment, these extend in parallel to each other. Indeed, they extend in substantially straight lines. The flows of liquid through them are isolated from each other.

A reason for providing the first connector 26 with more than one first connector outlet port 30,31 and the second connector with two first connector inlet ports 52,53 and two first connector outlet ports 55,56 will become apparent from a consideration of the cartridge 5 inserted in the right head part device by way of example.

It, like the other liquid treatment cartridge 4 is of the type described more fully in international patent application No. PCT/EP2015/050155 of 7 January 2015, the contents of which are hereby incorporated by reference. It has a housing formed by a cap-shaped part 66 and a vessel 67. An open end of the vessel 67 is closed by the cap-shaped part 66, which is joined to it e.g. by welding.

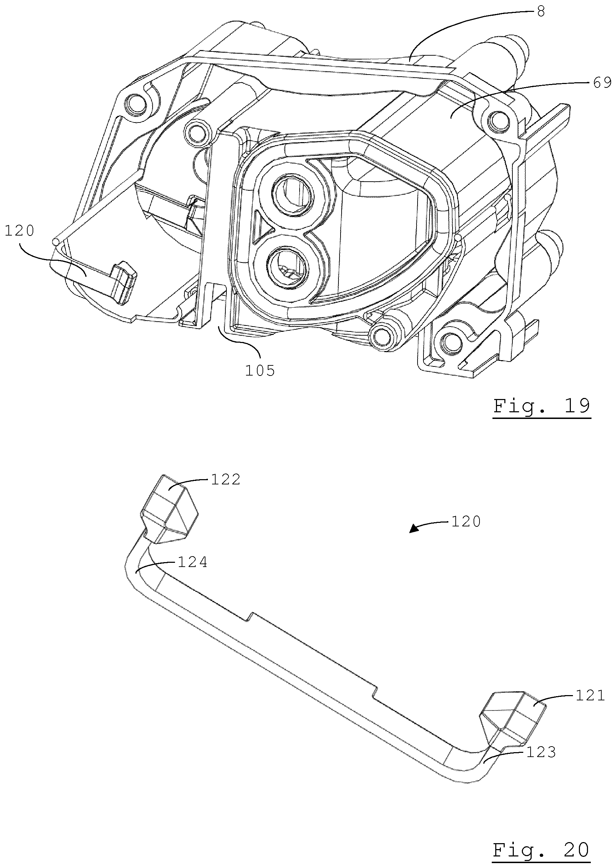

The cap-shaped part 66 includes an integral connecting head 68. The connecting head 68 is insertable into and retractable from a cavity of a receiving part 69 (Figs. 19,21-24) in a first position of the receiving part 69 with respect to the housing of the right head part device 3, in which the receiving part 69 is movably journalled.

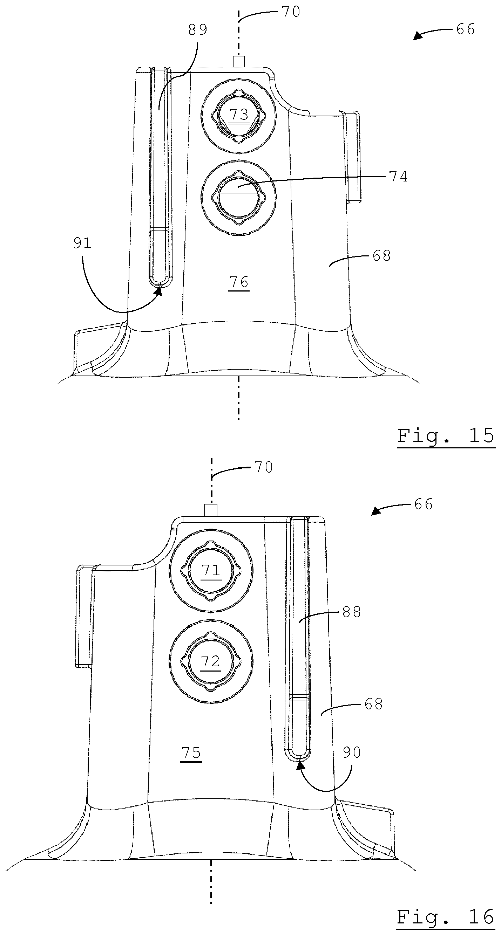

It is possible to define a reference axis 70 (Figs. 15,16) referred to herein as a cartridge axis that is aligned with the direction of insertion of the cartridge 5. The cartridge axis 70 extends from the closed end of the vessel 67 to the end of the cartridge 5 at which the connecting head 68 is located. In the illustrated embodiment, the cartridge 5 has an elongated shape and the cartridge axis 70 corresponds to a longitudinal axis of the cartridge 5.

The connecting head 68 is provided with four cartridge ports 71-74 in liquid communication with an interior of the cartridge 5. First and second ports 71,72 are provided in a first surface section 75 (Fig. 16) facing in a direction at an angle to the cartridge axis 70 such that the connecting head 68 tapers towards the axial end of the cartridge 5 at which the connecting head 68 is provided. Third and fourth cartridge ports 73,74 are provided in a second surface section 76 (Fig. 15) facing at an angle to the cartridge axis 70 such that the connecting head 68 tapers towards the axial end of the cartridge 5 at which the connecting head 68 is provided. The angle is larger than 45°, but smaller than 90° to achieve the taper. The first and second surface sections 75,76 face in directions of which the lateral components (with respect to the cartridge axis 5) are oppositely directed. There is thus a pair of cartridge ports 71-74 on each of opposite sides of the connecting head 68. One of the pairs is arranged to function as inlets for liquid and the other of the pairs is arranged to function as outlets for liquid. The first and second cartridge ports 71,72 are arranged in a row parallel to the cartridge axis 70, as are the third and fourth cartridge ports 73,74. Furthermore, the first cartridge port 71 is aligned with the third cartridge port 73 and the second cartridge port 72 is aligned with the fourth cartridge port. Exact alignment is not required, however. Grooves are provided for mounting sealing rings (not shown) around the cartridge ports 71-74. The first and second surface sections 75,76 are essentially planar, so that the sealing elements are compressed relatively uniformly when pressed against a co-operating surface to form seals around the cartridge ports 71-74. Due to the taper, the sealing elements are only compressed when the connecting head 68 is close to fully inserted into the cavity of the receiving part 69. This helps avoid wear or dislocation of the sealing elements during insertion.

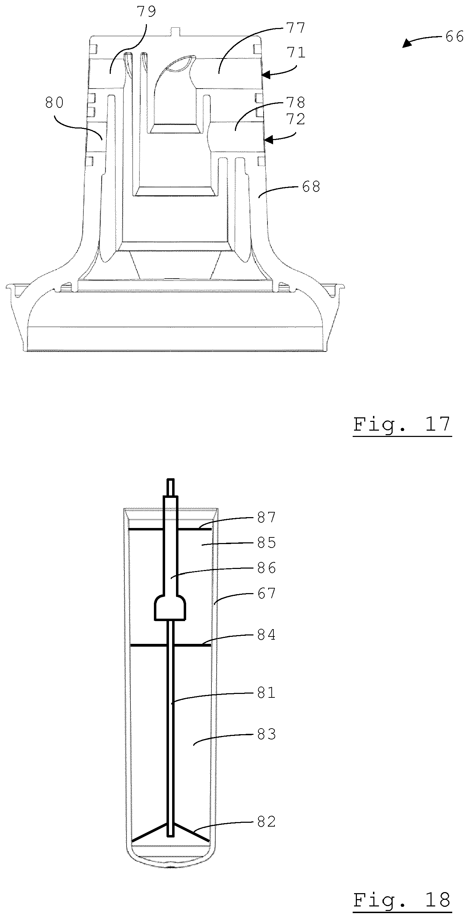

The cartridge ports 71-74 are each provided at an end of a respective channel 77-80 through the connecting head 68 (Fig. 17). End sections of at least the central three channels 77-79 are arranged concentrically, centred on the cartridge axis 70. They are directed essentially axially into the interior of the cartridge housing. The ends of the first to third channels 77-79 each terminate at a different respective axial position, so that these interior ends are provide within at least one of the other channels 78-80. Liquid can mingle at these ends unless they are separated by separate flow conductor parts.

This is in fact the case for the example used herein, in which flow conductor parts are plugged into the ends of the first and second channels 77,78.

One of these is a fall tube 81 (Fig. 18) extending to close to an opposite axial end of the cartridge 5 in this example. It passes through a flow distributor device 82 arranged at that end. The flow distributor device 82 adjoins a first bed 83 of granular liquid treatment medium. The liquid treatment medium may in particular include ion exchange resin, for example cation exchange resin. A cation exchange resin with a relatively high volumetric capacity is weakly acidic cation exchange resin. Regardless of the type, at least initially, a majority of the cation exchange resin by number of functional groups per unit volume may be in the hydrogen form. This medium is suitable for reducing the carbonate hardness of water contacting it. A minority of the cation exchange resin may be loaded with an alkali metal, e.g. potassium or sodium, for buffering purposes. Other sorbents such as activated carbon may be included in the liquid treatment medium of the first bed 83. A liquid-permeable divider part 84 separates the first bed 83 from a second bed 85 of granular liquid treatment medium differing in composition from the first bed 83. In an example it includes only liquid treatment media other than liquid treatment media for the treatment of liquid by ion exchange, e.g. sorbents such as activated carbon. In another example, it includes only liquid treatment media other than cation exchange material, e.g. at least an anion resin. A concentric flow conductor 86 is arranged around an axial section of the fall tube 81 proximal to the connecting head 68 and plugged into an end section of the second channel 78. Its other end terminates in the second bed 85. Thus, liquid entering the cartridge 5 through the second cartridge port 72 bypasses the first bed 83, whereas liquid entering through the first cartridge port 71 is conducted through it. The two flows mix in the second bed 85. The mix of liquid can leave the cartridge through the third and the fourth cartridge ports 73,74 simultaneously. A liquid-permeable screen 87 retains the material of the second bed 85.

Returning to the exterior of the connecting head 68 (Figs. 15-16), first and second alignment ridges 88,89 are provided adjacent the first and second cartridge ports 71,72 and adjacent the third and fourth cartridge ports 73,74 respectively. The alignment ridges 88,89 extend in a direction essentially parallel to the cartridge axis 70. Axial ends 90,91 distal to the axial end of the cartridge 5 at which the connecting head 68 is provided are rounded.

Each of the alignment ridges 88,89 has a lower and an upper section between which there is a stepped transition. The stepped transition is such that the elevation with respect to the surface section on which the alignment ridge 88,89 is provided decreases stepwise from the lower section to the upper section. It is noted that the alignment ridges 88,89 protrude in opposite directions. These directions are perpendicular to a reference plane in which the cartridge axis 70 lies, which plane is parallel to or contains a locus of movement of the connecting head 68 whilst inserted into the receiving part 69. This aids in converting a force exerted by an operator on the cartridge 5 into movement of the cartridge 5 and the receiving part 69.

The receiving part 69 (Figs. 19,21-24) includes a body and, in this example, first to sixth sealing elements 92-97. The body defines the cavity for receiving the connecting head 68. The cavity has a shape corresponding to that of the connecting head 68. It thus tapers in axial direction towards the end distal to the mouth of the cavity.

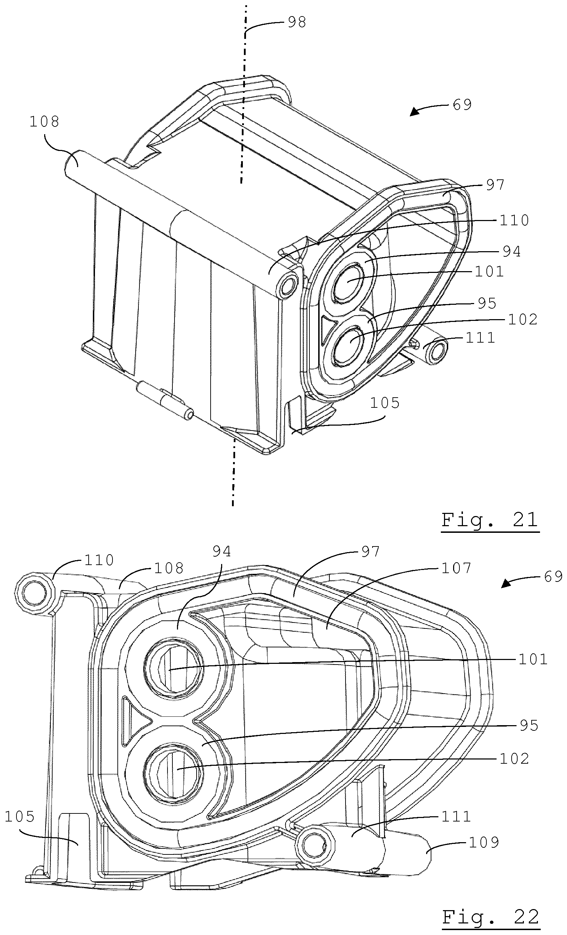

It is possible to define a reference axis 98 (Fig. 21) aligned with the cartridge axis 70 when the connecting head 68 is inserted into the cavity. This reference axis 98 is thus essentially perpendicular to the mouth of the cavity. The reference axis 98 lies in a plane of movement of the receiving part 69 between a first and a second position with respect to the housing formed by the housing parts 89.

Liquid-permeable ports 99-102 are provided in and through opposing first and second receiving part side wall sections. Each of the side wall sections is at an angle to the reference axis 98 such that the cavity tapers towards the end distal to the mouth. In the illustrated example, each of the side wall sections presents an essentially planar surface towards the cavity to allow it to compress the sealing elements provided around the cartridge ports 71-74.

When the connecting head 68 is fully inserted into the cavity, each of the cartridge ports 71-74 is in direct, sealed liquid communication with one of the receiving part ports 99-102. The seals isolate the flows of liquid through the cartridge ports 71-74 and the receiving part ports 99-102 from each other as well as from the cavity.

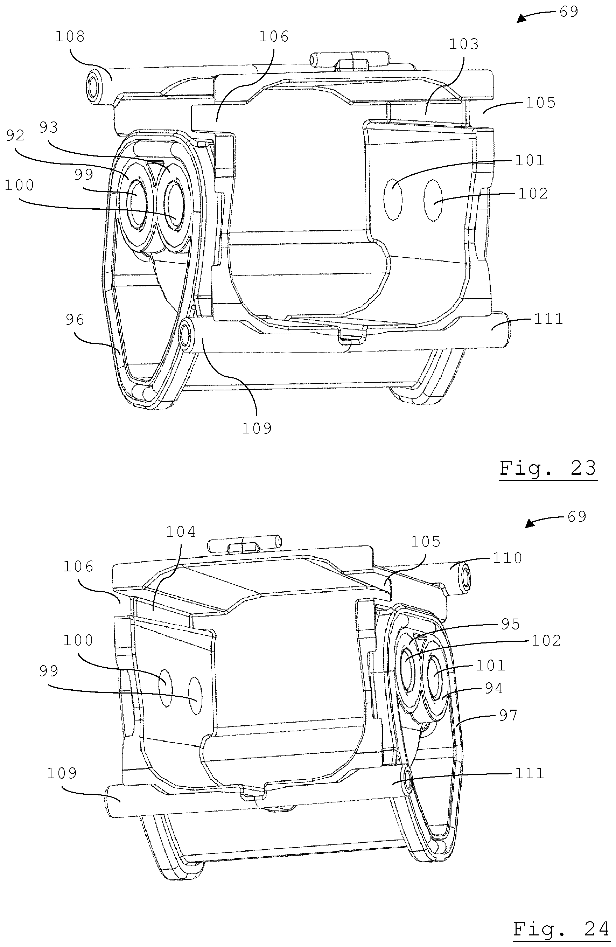

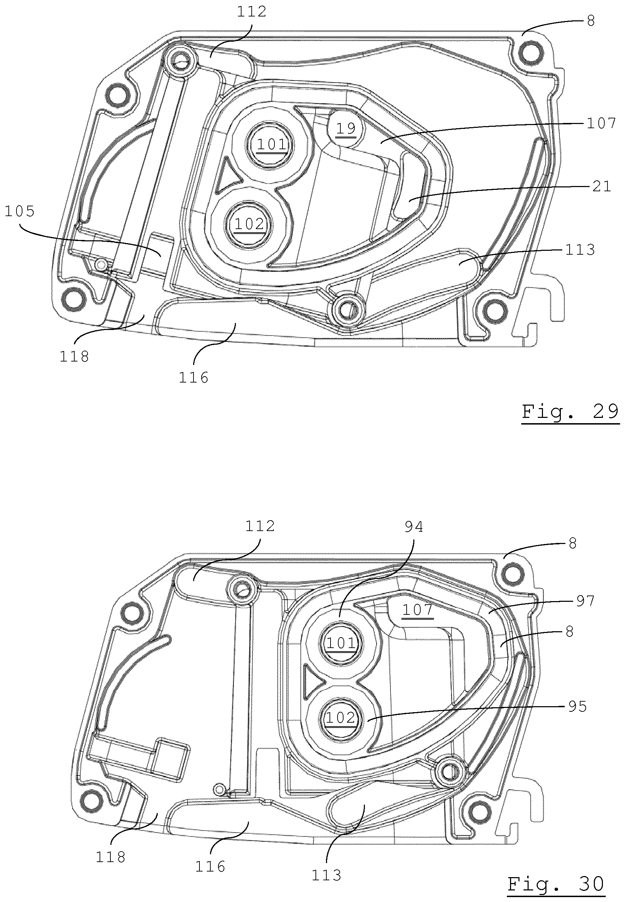

Alignment grooves 103,104 (Figs. 23,24) are at least open to the cavity and in this example also at axial ends adjacent a mouth of the cavity. These alignment grooves 103,104 are for receiving the first and second alignment ridges 88,89 on the connecting head 68 of the cartridge 5. They are on opposite sides of the cavity, facing each other. First (lower) sections 105,106 extend through the side wall sections of the receiving part 69 in which they are provided to form slits through these side wall sections. These sections 105,106 are provided at axial ends proximal to the mouth of the cavity. The lower sections of the alignment ridges 88,89 have an elevation relative to the surface sections from which they protrude that exceeds the thickness of the wall where the first alignment groove sections 105,106 are provided, in this example. The axial, in this example rounded, ends 90,91 of the alignment ridges 88,89 also protrude from the axial ends of the grooves 103,104 when the connecting head 68 is fully inserted into the cavity. The receiving part ports 99-102 , since they pass through a side wall of the receiving part 69, are also externally accessible. This allows them to form part of a valve mechanism similar to a sliding gate valve mechanism, of which the receiving part 69 forms the movable member. Specifically, in a first position of the receiving part 69 (Fig. 29), the receiving part ports 99-102 are closed by walls of the left and right housing parts 8,9. In a second position of the receiving part 69 (Fig. 30), corresponding to an operational position of the cartridge 5, the first and second receiving part ports 99,100 are in sealed liquid communication with the upper and lower first inlet ports 19,20, respectively. Third and fourth receiving part ports 101,102 are in sealed liquid communication with the upper and lower first outlet ports 22,23, respectively. This therefore places the upper and lower first inlet ports 19,20 in liquid communication with the first and second cartridge ports 71,72, respectively, and the upper and lower first outlet ports 22,23 with the third and fourth cartridge ports 73,74.

First to fourth receiving part sealing elements 92-95 each surround one of the receiving part ports 99-102 on the outside (Figs. 22-29). The fifth and sixth receiving part sealing elements 96,97 surround the first and second receiving part ports 99,100 and the third and fourth receiving part ports 101,102, respectively. They also each surround one of opposite openings of a bypass channel 107 (Figs. 22,29-30) extending through the body of the receiving part 69. The bypass channel 107 thus extends from a side of the receiving part 69 on which ports functioning as inlet openings are provided to a side of the receiving part 69 on which ports functioning as outlet openings are provided. These are opposite sides with respect to a central plane of movement of the receiving part 69 between the first and second positions with respect to the housing of the head part device 2,3 of which the receiving part 69 is a component.

The bypass channel 107 is in liquid communication with the second inlet port 21 and the second outlet port 24 to interconnect them in each of the first and second positions of the receiving part 69, as well as all intermediate positions. In the first position of the receiving part 69 moreover, the bypass channel 107 interconnects all the inlet ports 19-21 with all the outlet ports 22-24.

The receiving part 69 is journalled for movement between the first and second positions by way of guide protrusions 108-111 on the receiving part 69 and guides 112-115 (Figs. 27-28) defined on the inside of the left and right housing parts 8,9 for receiving the guide protrusions 108-111. The guides 112-115 of the illustrated example are grooves, but may alternatively be gates or a combination of gates and grooves. The movement is a combination of a displacement of the receiving part 69 and an internal rotation, so that the cartridge 5 swivels and is displaced, e.g. in a direction to and from a wall on which the head part 1 is mounted. During this movement, support surfaces defined by ledges 116,117 (Figs. 27-28) on the insides of the left and right housing parts 8,9 support the cartridge 5 by the rounded ends 90,91.

The ledges 116,117 prevent retraction of the connecting head 68 in the second position and all other positions leading up to the first position. This is because they obstruct the alignment ridges 88,89. Gaps 118,119 adjacent the ledges 116,117 (Figs. 27-30) are aligned with the alignment grooves 103,104 in the first position to allow the connecting head 68 to be inserted and retracted in that position.

This position of the receiving part 69 should be retained after a connecting head 68 has been retracted to allow the connecting head 68 of a replacement cartridge 5 to be inserted and also to keep the ends of the bypass channel 107 in full alignment with the second inlet and outlet ports 21,24. To this end, a latching device 120 (Fig. 19-20) is provided.

In the illustrated embodiment, the latching device 120 is a single resilient, essentially U-shaped insert having pawls 121,122 at respective free ends of its arms 123,124. Part of the receiving part 69 is received between the arms 123,124 in the first position. In that position, the pawls 121,122 engage the first sections 105,106 of the alignment grooves 103,104 when not occupied by sections of the alignment ridges 88,89.

When the receiving part 69 is moved into the first position, it forces the arms 123,124 apart. When the cartridge 5 is then retracted, the pawls 121,122 snap into place. When the connecting head 68 of the replacement cartridge 5 is inserted into the cavity of the receiving part 69, the lower sections of the alignment ridges 88,89 urge the pawls 121,122 out of the slits formed by the first alignment groove sections 105,106. This releases the receiving part 69, which can then be moved out of the first position towards the second position. Because only the lower sections of the alignment ridges 88,89 engage the pawls 121,122, the receiving part 69 is only released when the connecting head 68 has been fully inserted and is also able to clear the ledges 116,117.

A means of retaining the receiving part 69 in the second position and of signalling that the second position has been reached is also provided. This means comprises detents 125,126 (Figs. 27-28) in the support surfaces of the ledges 116,117. The ends 90,91 of the alignment ridges 88,89 supported by the support surfaces engage the detents 125,126 in the second position. The weight of the cartridge 5 holds the ends 90,91 in the detents 125,126. They are lifted out when the user pulls on the cartridge 5.

The left head part device 2 is identical to the right head part device 3 in terms of the valve mechanism contained therein and the shape and size of the receiving part 69. The cartridge 4 can thus also be identical. In the parallel configuration, with the first connector 26 in use, the liquid flowing through the third cartridge port 73 has the same composition as the liquid flowing through the fourth cartridge port 74. Thus, the liquid flowing through the third receiving part port 101, and the upper first outlet port 16 has the same composition as the liquid flowing through the fourth receiving part port 102 and the lower first outlet port 17. It is therefore no problem to mix them in the second flow conductor 51. The mix is conducted without further treatment through the second inlet port 21 the bypass channel 107 and the second outlet port 24 of the right head part device, when the cartridge 5 is in the second, operational position with respect to the right head part device 3. By contrast, the flow of as yet untreated liquid leaving the second outlet port 18 of the left head part device 2 is split into two sub-flows within the first connector 26, such that one sub-flow is provided through the upper first connector outlet port 30, the upper first inlet port 19 of the right head part device 3 and the first cartridge port 71. The other sub-flow is provided through the lower first connector outlet port 31, the lower first inlet port 20 and the second cartridge port 72. One sub-flow is treated in both the first and second beds 83,85. The other is treated in only the second bed 85, where the sub-flows are mixed again. Thus, the composition of the liquid passing through the third cartridge port 73, the third receiving part port 101 and the upper first outlet port 22 of the right head part device 3 is the same as that of the liquid passing through the fourth cartridge port 74, the fourth receiving part port 102 and the lower first outlet port 23 of the right head part device 3.

The invention is not limited to the embodiments described above, which may be varied within the scope of the accompanying claims. For instance, there may be a third head part device, allowing the use of both the first connector 26 and the second connector 27. In that case, there would be a series arrangement of one head part device with a pair of head part devices arranged in parallel, for example.

The second inlet and outlet ports 21,24 need not be connected by a bypass channel 107 through the receiving part 69, but may be interconnected via a further bypass channel. This would keep the flow of liquid between the second inlet and outlet ports 21,24 separate from the flows of liquid between the first inlet ports 19,20 and the first outlet ports 22,23 in each position of the receiving part 69, thus also when there is no cartridge 5 present.

One or more valves for adjusting a volumetric flow rate ratio between the sub-flows passing through the upper and lower first inlet ports 12,13,19,20 may be provided in the head part devices 2,3 in an embodiment.

### List of reference numerals

- 1: - head part
- 2: - left head part device
- 3: - right head part device
- 4: - left liquid treatment cartridge
- 5: - right liquid treatment cartridge
- 6: - left housing part of the left head part device
- 7: - right housing part of the left head part device
- 8: - left housing part of the right head part device
- 9: - right housing part of the right head part device
- 10: - left mounting plate
- 11: - right mounting plate
- 12: - upper first inlet port of left head part device
- 13: - lower first inlet port of left head part device
- 14: - second inlet port of left head part device
- 15: - inlet connector
- 16: - upper first outlet port of left head part device
- 17: - lower first outlet port of left head part device
- 18: - second outlet port of left head part device
- 19: - upper first inlet port of right head part device
- 20: - lower first inlet port of right head part device
- 21: - second inlet port of right head part device
- 22: - upper first outlet port of right head part device
- 23: - lower first outlet port of right head part device
- 24: - second outlet port of right head part device
- 25: - outlet connector
- 26: - first connector
- 27: - second connector
- 28: - first first connector inlet port
- 29: - second first connector inlet port
- 30: - upper first first connector outlet port
- 31: - lower first first connector outlet port
- 32: - second first connector outlet port
- 33-35: - sealing ridges of left head part device
- 36-38: - sealing ridges of right head part device
- 39: - left-facing first connector surface
- 40: - right-facing first connector surface
- 41: - first connector axis
- 42: - left connector support surface
- 43: - right connector support surface
- 44: - front first connector latching arm
- 45: - rear first connector latching arm
- 46: - rear opening in left support surface
- 47: - front opening in left support surface
- 48: - rear opening in right support surface
- 49: - front opening in right support surface
- 50: - first connector body
- 51: - second first connector flow conductor
- 52: - upper first connector inlet port of second connector
- 53: - lower first connector inlet port of second connector
- 54: - second connector inlet port of second connector
- 55: - upper first connector outlet port of second connector
- 56: - lower first connector outlet port of second connector
- 57: - second connector outlet port of second connector
- 58: - left-facing second connector surface
- 59: - right-facing second connector surface
- 60: - second connector axis
- 61: - front second connector latching arm
- 62: - rear second connector latching arm
- 63: - first flow conductor of second connector
- 64: - second flow conductor of second connector
- 65: - third flow conductor of second connector
- 66: - cap-shaped part
- 67: - vessel
- 68: - connecting head
- 69: - receiving part
- 70: - cartridge axis
- 71: - first cartridge port
- 72: - second cartridge port
- 73: - third cartridge port
- 74: - fourth cartridge port
- 75: - first surface section
- 76: - second surface section
- 77: - first channel
- 78: - second channel
- 79: - third channel
- 80: - fourth channel
- 81: - fall tube
- 82: - flow distributor device
- 83: - first bed
- 84: - liquid-permeable divider part
- 85: - second bed
- 86: - concentric flow conductor
- 87: - liquid-permeable screen
- 88: - first alignment ridge
- 89: - second alignment ridge
- 90: - rounded end of first alignment ridge
- 91: - rounded end of second alignment ridge
- 92-97: - receiving part sealing elements
- 98: - receiving part axis
- 99-102: - receiving part ports
- 103: - first alignment groove
- 104: - second alignment groove
- 105: - lower section of first alignment groove
- 106: - lower section of second alignment groove
- 107: - bypass channel
- 108-111: - guide protrusions
- 112-115: - guide grooves
- 116: - left ledge
- 117: - right ledge
- 118: - left gap
- 119: - right gap
- 120: - latching device
- 121: - left pawl
- 122: - right pawl
- 123: - left arm
- 124: - right arm
- 125: - left detent
- 126: - right detent

## Claims

1. Connector for placing adjacent devices (2,3) in a head part (1) of a liquid treatment apparatus in liquid communication with each other,
wherein the head part devices (2,3) are of the type arranged to receive at least a connecting head (68) of a replaceable liquid treatment cartridge (4,5),
wherein a first of the head part devices (2,3) has at least one inlet port (12-14), at least one first outlet port (16,17) and at least one second outlet port (18),
wherein, at least in an operational position of the liquid treatment cartridge (4), only the first of the first and second outlet ports (16-18) are in liquid communication with at least one of the inlet ports (12-14) via the liquid treatment cartridge (4) and the second outlet ports (18) are in liquid communication with at least one of the inlet ports (12,13,14),
wherein a second of the head part devices (2,3) has at least one first inlet port (19,20), at least one second inlet port (21) and at least one outlet port (22-24),
wherein, at least in an operational position of the liquid treatment cartridge (5), only the first of the first and second inlet ports (19,20,21) are in liquid communication with at least one of the outlet ports (22-24) via the liquid treatment cartridge (4,5) and the second inlet ports (21) are in liquid communication with at least one of the outlet ports (22-24),
wherein the connector is one of: (i) positionable with respect to the head part devices (2,3) such as to place the first and second outlet ports of the first head part device (2) in sealed liquid communication with the second and first inlet ports of the second head part device (3), respectively; and (ii) positionable with respect to the head part devices (2,3) such as to place at least the first outlet ports of the first head part device in sealed liquid communication with the first inlet ports of the second head part device,
wherein the connector has at least two connector inlet ports (28,29) and at least two connector outlet ports (30-32),
wherein the connector includes a first flow conductor (50) interconnecting a first sub-set of the connector inlet ports (28,29) and a first sub-set of the connector outlet ports (30-32), and
wherein the connector includes a second flow conductor (51) interconnecting a second sub-set of the connector inlet ports (28,29) and a second sub-set of the connector outlet ports (30-32), and
wherein flows of liquid through one of the first and second flow conductors (50,51) are kept separate from those through the other by at least one of the first and second flow conductors (50,51),
**characterised in that**
the first and second flow conductors (50,51) are arranged so that the separated flows of liquid cross each other.

2. Connector according to claim 1 or the pre-amble of claim 1,
wherein the connector inlet and connector outlet ports (28-32) lie in planes on respective, e.g. opposite, sides of the connector and define apertures in respective exterior surface sections, e.g. sections of respective exterior surfaces (39,40) of the connector.

3. Connector according to claim 2,
wherein the connector has an axis (41) corresponding to a direction of insertion of the connector between the head part devices (2,3), and
wherein the connector includes a latch device (44,45), e.g. forming part of a snap-lock mechanism releasable by manipulating at least one part (44,45) against an elastic force, for preventing movement in the axial direction.

4. Connector according to any one of the preceding claims,
wherein one of the first and second flow conductors (50,51) passes through the other.

5. Connector according to claim 4,
wherein the connector includes a body (50) having a hollow interior and forming one of the flow conductors (50,51), and
wherein the connector ports (28-32) interconnected by the first and second flow conductors (50,51) are provided in respective wall sections of the body (50).

6. Connector according to any one of the preceding claims,
wherein the first and second sub-sets of at least one of the connector inlet ports (28,29) and the connector outlet ports (30-32) have different numbers of ports.

7. Set of connectors for placing adjacent devices (2,3) in a head part (1) of a liquid treatment apparatus in liquid communication with each other,
wherein the head part devices (2,3) are of the type arranged to receive at least a connecting head (68) of a replaceable liquid treatment cartridge (4,5),
wherein a first of the head part devices (2,3) has at least one inlet port (12-14), at least one first outlet port (16,17) and at least one second outlet port (18),
wherein, at least in an operational position of the liquid treatment cartridge (4), only the first of the first and second outlet ports (16-18) are in liquid communication with at least one of the inlet ports (12-14) via the liquid treatment cartridge (4) and the second outlet ports (18) are in liquid communication with at least one of the inlet ports (12-14),
wherein a second of the head part devices (2,3) has at least one first inlet port (19,20), at least one second inlet port (21) and at least one outlet port (22-24),
wherein, at least in an operational position of the liquid treatment cartridge (5), only the first of the first and second inlet ports (19-21) are in liquid communication with at least one of the outlet ports (22-24) via the liquid treatment cartridge (4,5) and the second inlet ports (21) are in liquid communication with at least one of the outlet ports (22-24),
wherein a first connector (26) is positionable with respect to the head part devices (2,3) such as to place the first and second outlet ports (16-18) of the first head part device (2) in sealed liquid communication with the second and first inlet ports (19-21) of the second head part device (3), respectively, and a second connector (27) is positionable with respect to the head part devices (2,3) such as to place at least the first outlet ports (16,23) of the first head part device (2) in sealed liquid communication with the first inlet ports (19,20) of the second head part device (3),
wherein each connector (26;27) has at least two connector inlet ports (28,29;52-54) and at least two connector outlet ports (30-32;55-57),
wherein each connector (26;27) includes a first flow conductor (50;63) interconnecting a first sub-set of the connector inlet ports (28,29;52-54) and a first sub-set of the connector outlet ports (30-32;55-57), and
wherein each connector (26;27) includes a second flow conductor (51;64) interconnecting a second sub-set of the connector inlet ports (28,29;52-54) and a second sub-set of the connector outlet ports (30-32;55-57),
wherein flows of liquid through one of the first and second flow conductors (50,51) are kept separate from those through the other by at least one of the first and second flow conductors (50,51), and
wherein at least one of the first and second connectors (26;27) is a connector (26) according to any one of claims 1-6.

8. Set according to claim 7,
wherein the first and second flow conductors (50,51) of one of the first and second connectors (26;27) are arranged such that the separated flows of liquid cross each other, and
wherein the first and second flow conductors (63,64) of the other of the first and second connectors (26,27) extend essentially parallel to each other.

9. Set according to claim 7 or 8,
wherein at least one of (i) the connector inlet ports (28,29;52-54) and (ii) the connector outlet ports(30-32;55-57) of each connector are at least three in number.

10. Head part of a liquid treatment apparatus, including:
at least two adjacent head part devices (2,3),
wherein each head part device (2,3) is arranged to receive at least a connecting head (68) of a replaceable liquid treatment cartridge (4,5),
wherein a first of the head part devices (2,3) has at least one inlet port (12-14), at least one first outlet port (16,17) and at least one second outlet port (18),
wherein, at least in an operational position of the liquid treatment cartridge (4), only the first of the first and second outlet ports (16-18) are in liquid communication with at least one of the inlet ports (12-14) via the liquid treatment cartridge (4) and the second outlet ports (18) are in liquid communication with at least one of the inlet ports (12-14),
wherein a second of the head part devices (2,3) has at least one first inlet port (19,20), at least one second inlet port (21) and at least one outlet port (22-24),
wherein, at least in an operational position of the liquid treatment cartridge (5), only the first of the first and second inlet ports (19-21) are in liquid communication with at least one of the outlet ports (22-24) via the liquid treatment cartridge (4,5) and the second inlet ports (21) are in liquid communication with at least one of the outlet ports (22-24); and,
a connector (26) according to any one of claims 1-6,
wherein the connector (26) is one of (i) arranged to place the first and second outlet ports (16-18) of the first of the head part devices (2,3) in sealed liquid communication with the second and first inlet ports (19-21), respectively, and (ii) arranged to place the first and second outlet ports (16-18) of the first head part device (2) in sealed liquid communication with the first and second inlet ports (19-21), respectively, of the second head part device (3).

11. Head part according to claim 10,
wherein the inlet ports (12-14) of the first head part device (2) include at least one first inlet port (12,13) and at least one second inlet port (14),
wherein the outlet ports (22-24) of the second head part device (3) include at least one first outlet port (22,23) and at least one second outlet port (24),
and wherein positions of the first and second inlet ports (12-14,19-21) relative to those of the first and second outlet ports (16-18,22-24) are the same for each of the first and second head part devices (2,3).

12. Head part according to claim 10 or 11,
wherein the head part devices (2,3) are connected to define a space, and
wherein the connector is insertable and retractable from the space defined by the head part devices (2,3).

13. Head part according to any one of claims 10-12,
wherein the first and second inlet ports (19-21) of one of the head part devices (2,3) face into the space and include apertures located in a common plane, and
wherein the first and second outlet ports (16-18) of the other of the head part devices (2,3) face into the space and include apertures located in a common plane.

14. Liquid treatment apparatus, including a head part (1) according to any one of claims 10-13 and at least one replaceable liquid treatment cartridge (4,5).

15. Method of placing adjacent devices (2,3) in a head part (1) of a liquid treatment apparatus, e.g. a head part (1) according to any one of claims 10-13, in liquid communication with each other,
wherein the head part devices (2,3) are of the type arranged to receive at least a connecting head (68) of a replaceable liquid treatment cartridge (4,5),
wherein a first of the head part devices (2,3) has at least one inlet port (12-14), at least one first outlet port (16,17) and at least one second outlet port (18),
wherein, at least in an operational position of the liquid treatment cartridge (4), only the first of the first and second outlet ports (16-18) are in liquid communication with at least one of the inlet ports (12-14) via the liquid treatment cartridge (4) and the second outlet ports (18) are in liquid communication with at least one of the inlet ports (12-14),
wherein a second of the head part devices (2,3) has at least one first inlet port (19,20), at least one second inlet port (21) and at least one outlet port (22-24),
wherein, at least in an operational position of the liquid treatment cartridge (5), only the first of the first and second inlet ports (19-21) are in liquid communication with at least one of the outlet ports (22-24) via the liquid treatment cartridge (4,5) and the second inlet ports (21) are in liquid communication with at least one of the outlet ports (22-24), and
wherein the method includes selecting one of the first and second connectors (26,27) of a set of connectors according to any one of claims 7-9.

## Patentansprüche

1. Verbindungsstück, um benachbarte Einrichtungen (2, 3) in einem Kopfteil (1) eines Flüssigkeitsbehandlungsgeräts in Flüssigkeitsverbindung miteinander zu bringen,
wobei die Kopfteileinrichtungen (2, 3) von der Art sind, die eingerichtet ist, um mindestens einen Verbindungskopf (68) einer austauschbaren Flüssigkeitsbehandlungskartusche (4, 5) aufzunehmen,
wobei eine erste der Kopfteileinrichtungen (2, 3) wenigstens eine Einlassanschlussöffnung (12-14), wenigstens eine erste Auslassanschlussöffnung (16, 17) und wenigstens eine zweite Auslassanschlussöffnung (18) aufweist,
wobei zumindest in einer Betriebsposition der Flüssigkeitsbehandlungskartusche (4) nur die ersten von den ersten und zweiten Auslassanschlussöffnungen (16-18) über die Flüssigkeitsbehandlungskartusche (4) in Flüssigkeitsverbindung mit mindestens einer der Einlassanschlussöffnung (12-14) stehen, und die zweiten Auslassanschlussöffnungen (18) in Flüssigkeitsverbindung mit wenigstens einer der Einlassanschlussöffnungen (12, 13, 14) stehen,
wobei eine zweite der Kopfteileinrichtungen (2, 3) wenigstens einer ersten Einlassanschlussöffnung (19, 20), wenigstens einer zweiten Einlassanschlussöffnung (21) und wenigstens eine Auslassanschlussöffnung (22-24) aufweist,
wobei zumindest in einer Betriebsposition der Flüssigkeitsbehandlungskartusche (5) nur die ersten von den ersten und zweiten Einlassanschlussöffnungen (19, 20, 21) über die Flüssigkeitsbehandlungskartusche (4, 5) in Flüssigkeitsverbindung mit wenigstens einem der Auslassanschlussöffnungen (22-24) stehen, und die zweiten Einlassanschlussöffnungen (21) in Flüssigkeitsverbindung mit wenigstens einem der Auslassanschlussöffnungen (22-24) stehen,
wobei das Verbindungsstück eines ist von: (i) in Bezug auf den Kopfteileinrichtungen (2, 3) positionierbar, um die ersten und zweiten Auslassanschlussöffnungen der ersten Kopfteileinrichtung (2) in abgedichtete Flüssigkeitsverbindung mit den zweiten beziehungsweise den ersten Einlassanschlussöffnungen der zweiten Kopfteileinrichtung (3) zu bringen; und (ii) in Bezug auf den Kopfteileinrichtungen (2, 3) positionierbar, um zumindest die ersten Auslassanschlussöffnungen der ersten Kopfteileinrichtung in abgedichtete Flüssigkeitsverbindung mit den ersten Einlassanschlussöffnungen der zweiten Kopfteileinrichtung zu bringen,
wobei das Verbindungsstück wenigstens zwei Verbindungsstück-Einlassanschlussöffnungen (28, 29) und wenigstens zwei Verbindungsstück-Auslassanschlussöffnungen (30-32) aufweist,
wobei das Verbindungsstück einen ersten Strömungsleiter (50) umfasst, die eine erste Teilmenge der Verbindungsstück-Einlassanschlussöffnungen (28, 29) und eine erste Teilmenge der Verbindungsstück-Auslassanschlussöffnungen (30-32) miteinander verbindet, und
wobei das Verbindungsstück einen zweiten Strömungsleiter (51) umfasst, die eine zweite Teilmenge der Verbindungsstück-Einlassanschlussöffnungen (28, 29) und eine zweite Teilmenge der Verbindungsstück-Auslassanschlussöffnungen (30-32) miteinander verbindet, und
wobei Flüssigkeitsströme durch einen der ersten und zweiten Strömungsleiter (50, 51) von denen durch den anderen durch wenigstens einen der ersten und zweiten Strömungsleiter (50, 51) getrennt gehalten werden,
**dadurch gekennzeichnet, dass** die ersten und zweiten Strömungsleiter (50, 51) derart angeordnet sind, dass die getrennten Flüssigkeitsströme einander kreuzen.

2. Verbindungsstück nach Anspruch 1 oder dem Oberbegriff von Anspruch 1, wobei die Verbindungsstückeinlass- und Verbindungsstückauslassanschlussöffnungen (28-32) in Ebenen auf jeweiligen, z. B. gegenüberliegenden, Seiten des Verbindungsstücks liegen und in jeweiligen äußeren Oberflächenabschnitten, z. B. in Abschnitten von jeweiligen äußeren Oberflächen (39, 40) des Verbindungsstücks, Öffnungen definieren.

3. Verbindungsstück nach Anspruch 2,
wobei das Verbindungsstück eine Achse (41) aufweist, die einer Einfuhrrichtung des Verbindungsstücks zwischen die Kopfteileinrichtungen (2, 3) entspricht, und
wobei das Verbindungsstück eine Sperrvorrichtung (44, 45) zum Verhindern einer Bewegung in axialer Richtung umfasst, die beispielsweise Teil eines Einrastmechanismus ist, der durch Manipulieren mindestens eines Teils (44, 45) gegen eine elastische Kraft freigegeben werden kann.

4. Verbindungsstück nach einem der vorhergehenden Ansprüche, wobei einer der ersten und zweiten Strömungsleiter (50, 51) durch die andere hindurch verläuft.

5. Verbindungsstück nach Anspruch 4,
wobei das Verbindungsstück einen Körper (50) umfasst, der einen hohlen Innenraum aufweist und einen der Strömungsleiter (50, 51) bildet, und
wobei die Verbindungsstückanschlussöffnungen (28-32), die durch die ersten und zweiten Strömungsleiter (50, 51) miteinander verbunden werden, in jeweiligen Wandabschnitten des Körpers (50) vorgesehen sind.

6. Verbindungsstück nach einem der vorhergehenden Ansprüche, wobei die ersten und zweiten Teilmengen von mindestens einer der Verbindungsstück-Einlassanschlussöffnungen (28, 29) und der Verbindungsstück-Auslassanschlussöffnungen (30-32) eine unterschiedliche Anzahl von Anschlussöffnungen aufweisen.

7. Verbindungsstücksatz, um benachbarte Einrichtungen (2, 3) in einem Kopfteil (1) eines Flüssigkeitsbehandlungsgeräts in Flüssigkeitsverbindung miteinander zu bringen,
wobei die Kopfteileinrichtungen (2, 3) von der Art sind, die eingerichtet ist, um mindestens einen Verbindungskopf (68) einer austauschbaren Flüssigkeitsbehandlungskartusche (4, 5) aufzunehmen,
wobei eine erste der Kopfteileinrichtungen (2, 3) wenigstens eine Einlassanschlussöffnung (12-14), mindestens eine erste Auslassanschlussöffnung (16, 17) und wenigstens eine zweite Auslassanschlussöffnung (18) aufweist,
wobei zumindest in einer Betriebsposition der Flüssigkeitsbehandlungskartusche (4) nur die ersten von den ersten und zweiten Auslassanschlussöffnungen (16-18) über die Flüssigkeitsbehandlungskartusche (4) in Flüssigkeitsverbindung mit mindestens einer der Einlassanschlussöffnungen (12-14) und die zweiten Auslassanschlussöffnungen (18) in Flüssigkeitsverbindung mit mindestens einer der Einlassanschlussöffnungen (12-14) stehen,
wobei eine zweite der Kopfteileinrichtungen (2, 3) wenigstens eine erste Einlassanschlussöffnung (19, 20), wenigstens eine zweite Einlassanschlussöffnung (21) und wenigstens eine Auslassanschlussöffnung (22-24) aufweist,
wobei zumindest in einer Betriebsposition der Flüssigkeitsbehandlungskartusche (5) nur die ersten von den ersten und zweiten Einlassanschlussöffnungen (19-21) über die Flüssigkeitsbehandlungskartusche (4, 5) in Flüssigkeitsverbindung mit wenigstens einer der Auslassanschlussöffnungen (22-24) stehen, und die zweiten Einlassanschlussöffnungen (21) in Flüssigkeitsverbindung mit wenigstens einer der Auslassanschlussöffnungen (22-24) stehen,
wobei ein erstes Verbindungsstück (26) in Bezug auf die Kopfteileinrichtungen (2, 3) positionierbar ist, um die ersten und zweiten Auslassanschlussöffnungen (16-18) der ersten Kopfteileinrichtung (2) in abgedichteter Flüssigkeitsverbindung mit den zweiten beziehungsweise mit den ersten Einlassanschlussöffnungen (19-21) der zweiten Kopfteileinrichtung (3) anzuordnen, und ein zweites Verbindungsstück (27) in Bezug auf die Kopfteileinrichtungen (2, 3) positionierbar ist, um wenigstens die ersten Auslassanschlussöffnungen (16, 23) der ersten Kopfteileinrichtung (2) in abgedichtete Flüssigkeitsverbindung mit den ersten Einlassanschlussöffnungen (19, 20) der zweiten Kopfteileinrichtung (3) zu bringen,
wobei jedes Verbindungsstück (26; 27) wenigstens zwei Verbindungsstück-Einlassanschlussöffnungen (28, 29; 52-54) und wenigstens zwei Verbindungsstück-Auslassanschlussöffnungen (30-32; 55-57) aufweist,
wobei jedes Verbindungsstück (26; 27) einen ersten Strömungsleiter (50; 63) umfasst, den eine erste Teilmenge der Verbindungsstück-Einlassanschlussöffnungen (28, 29; 52-54) und eine erste Teilmenge der Verbindungsstück-Auslassanschlussöffnungen (30-32; 55-57) miteinander verbindet, und
wobei jedes Verbindungsstück (26; 27) einen zweiten Strömungsleiter (51; 64) umfasst, der eine zweite Teilmenge der Verbindungsstück-Einlassanschlussöffnungen (28, 29; 52-54) und eine zweite Teilmenge der Verbindungsstück-Auslassanschlussöffnungen (30-32; 55-57) miteinander verbindet,
wobei Flüssigkeitsströme durch einen der ersten und zweiten Strömungsleiter (50, 51) von denen durch den anderen durch mindestens einen der ersten und zweiten Strömungsleiter (50, 51) getrennt gehalten werden, und
wobei wenigstens eines von den ersten und zweiten Verbindungsstücken (26; 27) ein Verbindungsstück (26) nach einem der Ansprüche 1-6 ist.

8. Satz nach Anspruch 7,
wobei die ersten und zweiten Strömungsleiter (50, 51) eines von den ersten und zweiten Verbindungsstücken (26; 27) derart angeordnet sind, dass sich die getrennten Flüssigkeitsströme kreuzen, und
wobei sich die ersten und zweiten Strömungsleiter (63, 64) des anderen von den ersten und zweiten Verbindungsstücken (26, 27) im Wesentlichen parallel zueinander erstrecken.

9. Satz nach Anspruch 7 oder 8, wobei wenigstens eine (i) der Verbindungsstück-Einlassanschlussöffnungen (28, 29; 52-54) und (ii) der Verbindungsstück-Auslassanschlussöffnungen (30-32; 55-57) jedes Verbindungsstücks wenigstens drei an der Zahl sind.

10. Kopfteil einer Flüssigkeitsbehandlungsvorrichtung, umfassend:
wenigstens zwei benachbarte Kopfteileinrichtungen (2, 3),
wobei jede Kopfteileinrichtung (2, 3) eingerichtet ist, um wenigstens einen Verbindungskopf (68) einer austauschbaren Flüssigkeitsbehandlungskartusche (4, 5) aufzunehmen,
wobei eine erste der Kopfteileinrichtungen (2, 3) wenigstens eine Einlassanschlussöffnung (12-14), wenigstens eine erste Auslassanschlussöffnung (16, 17) und wenigstens eine zweite Auslassanschlussöffnung (18) aufweist,
wobei zumindest in einer Betriebsposition der Flüssigkeitsbehandlungskartusche (4) nur die ersten von den ersten und zweiten Auslassanschlussöffnungen (16-18) über die Flüssigkeitsbehandlungskartusche (4) in Flüssigkeitsverbindung mit wenigstens einer von den Einlassanschlussöffnungen (12-14), und die zweiten Auslassanschlussöffnungen (18) in Flüssigkeitsverbindung mit wenigstens einem der Einlassanschlussöffnungen (12-14) stehen,
wobei eine zweite der Kopfteileinrichtungen (2, 3) wenigstens eine erste Einlassanschlussöffnung (19, 20), wenigstens eine zweite Einlassanschlussöffnung (21) und wenigstens eine Auslassanschlussöffnung (22-24) aufweist,
wobei wenigstens in einer Betriebsposition der Flüssigkeitsbehandlungskartusche (5) nur die ersten von den ersten und zweiten Einlassanschlussöffnungen (19-21) über die Flüssigkeitsbehandlungskartusche (4, 5) in Flüssigkeitsverbindung mit mindestens einer der Auslassanschlussöffnungen (22-24), und die zweiten Einlassanschlussöffnungen (21) in Flüssigkeitsverbindung mit wenigstens einer der Auslassanschlussöffnungen (22-24) stehen; und
ein Verbindungsstück (26) nach einem der Ansprüche 1-6,
wobei das Verbindungsstück (26) eines ist von (i) eingerichtet, um die ersten und zweiten Auslassanschlussöffnungen (16-18) der ersten der Kopfteileinrichtungen (2, 3) in abgedichtete Flüssigkeitsverbindung mit den zweiten beziehungsweise den ersten Einlassanschlussöffnungen (19-21) zu bringen, und (ii) eingerichtet, um die ersten und zweiten Auslassanschlussöffnungen (16-18) der ersten Kopfteileinrichtung (2) in abgedichtete Flüssigkeitsverbindung mit den ersten beziehungsweise den zweiten Einlassanschlussöffnungen (19-21) der zweiten Kopfteileinrichtung (3) zu bringen.

11. Kopfteil nach Anspruch 10,
wobei die Einlassanschlussöffnungen (12-14) der ersten Kopfteileinrichtung (2) wenigstens eine erste Einlassanschlussöffnung (12, 13) und wenigstens eine zweite Einlassanschlussöffnung (14) umfassen,
wobei die Auslassanschlussöffnungen (22-24) der zweiten Kopfteileinrichtung (3) wenigstens eine erste Auslassanschlussöffnung (22, 23) und wenigstens eine zweite Auslassanschlussöffnung (24) umfassen,
und wobei die Positionen der ersten und zweiten Einlassanschlussöffnungen (12-14, 19-21) in Bezug auf die der ersten und zweiten Auslassanschlussöffnungen (16-18, 22-24) für jede der ersten und zweiten Kopfteileinrichtungen (2, 3) die gleichen sind.

12. Kopfteil nach Anspruch 10 oder 11,
wobei die Kopfteileinrichtungen (2, 3) verbunden sind, um einen Raum zu definieren, und
wobei das Verbindungsstück in den Raum, der durch die Kopfteileinrichtungen (2, 3) definiert ist, einführbar und aus ihm zurücknehmbar ist.

13. Kopfteil nach einem der Ansprüche 10-12,
wobei die ersten und zweiten Einlassanschlussöffnungen (19-21) einer der Kopfteileinrichtungen (2, 3) zum Raum hingewandt sind und Öffnungen umfassen, die sich in einer gemeinsamen Ebene befinden, und
wobei die ersten und zweiten Auslassanschlussöffnungen (16-18) der anderen der Kopfteileinrichtungen (2, 3) zum Raum hingewandt sind und Öffnungen umfassen, die sich in einer gemeinsamen Ebene befinden.

14. Flüssigkeitsbehandlungsgerät, umfassend einen Kopfteil (1) nach einem der Ansprüche 10 bis 13 und wenigstens eine austauschbare Flüssigkeitsbehandlungskartusche (4, 5).

15. Verfahren zum in Flüssigkeitsverbindung miteinander Bringen von benachbarten Einrichtungen (2, 3) in einem Kopfteil (1) eines Flüssigkeitsbehandlungsgeräts, z. B. in einem Kopfteil (1) nach einem der Ansprüche 10-13,
wobei die Kopfteileinrichtungen (2, 3) von der Art sind, die eingerichtet ist, um mindestens einen Verbindungskopf (68) einer austauschbaren Flüssigkeitsbehandlungskartusche (4, 5) aufzunehmen,
wobei eine erste der Kopfteileinrichtungen (2, 3) mindestens einen Einlassanschlussöffnungen (12-14), wenigstens eine erste Auslassanschlussöffnung (16, 17) und wenigstens eine zweite Auslassanschlussöffnung (18) aufweist,
wobei zumindest in einer Betriebsposition der Flüssigkeitsbehandlungskartusche (4) nur die ersten von den ersten und zweiten Auslassanschlussöffnungen (16-18) über die Flüssigkeitsbehandlungskartusche (4) in Flüssigkeitsverbindung mit wenigstens einer der Einlassanschlussöffnungen (12-14) stehen, und die zweiten Auslassanschlussöffnungen (18) in Flüssigkeitsverbindung mit wenigstens einem der Einlassanschlussöffnung (12-14) stehen,
wobei eine zweite der Kopfteileinrichtungen (2, 3) wenigstens eine erste Einlassanschlussöffnung (19, 20), wenigstens eine zweite Einlassanschlussöffnung (21) und wenigstens eine Auslassanschlussöffnung (22-24) aufweist,
wobei zumindest in einer Betriebsposition der Flüssigkeitsbehandlungskartusche (5) nur die ersten von den ersten und zweiten Einlassanschlussöffnungen (19-21) über die Flüssigkeitsbehandlungskartusche (4, 5) in Flüssigkeitsverbindung mit wenigstens einer der Auslassanschlussöffnungen (22-24), und die zweiten Einlassanschlussöffnungen (21) in Flüssigkeitsverbindung mit wenigstens einem der Auslassanschlussöffnungen (22-24) stehen, und
wobei das Verfahren das Auswählen eines von den ersten und zweiten Verbindungsstücken (26, 27) eines Verbindungsstücksatzes nach einem der Ansprüche 7-9 umfasst.

## Revendications

1. Connecteur pour placer des dispositifs adjacents (2, 3) dans une partie de tête (1) d'un appareil de traitement de liquide en communication fluidique l'un avec l'autre,
les dispositifs de partie de tête (2, 3) étant du type agencé pour recevoir au moins une tête de liaison (68) d'une cartouche de traitement de liquide remplaçable (4, 5),
un premier des dispositifs de partie de tête (2, 3) ayant au moins un orifice d'entrée (12-14), au moins un premier orifice de sortie (16, 17) et au moins un second orifice de sortie (18),
au moins dans une position opérationnelle de la cartouche de traitement de liquide (4), uniquement le premier parmi les premier et second orifices de sortie (16-18) étant en communication fluidique avec au moins un des orifices d'entrée (12-14) par l'intermédiaire de la cartouche de traitement de liquide (4), et les seconds orifices de sortie (18) étant en communication fluidique avec au moins un des orifices d'entrée (12, 13, 14),
un second des dispositifs de partie de tête (2, 3) ayant au moins un premier orifice d'entrée (19, 20), au moins un second orifice d'entrée (21) et au moins un orifice de sortie (22-24),
au moins dans une position opérationnelle de la cartouche de traitement de liquide (5), uniquement le premier parmi les premier et second orifices d'entrée (19, 20, 21) étant en communication fluidique avec au moins un des orifices de sortie (22-24) par l'intermédiaire de la cartouche de traitement de liquide (4, 5), et les seconds orifices d'entrée (21) étant en communication fluidique avec au moins un des orifices de sortie (22-24),
le connecteur étant l'un parmi : (i) apte à être positionné par rapport aux dispositifs de partie de tête (2, 3) de façon à placer les premier et second orifices de sortie du premier dispositif de partie de tête (2) en communication fluidique étanche avec les second et premier orifices d'entrée du second dispositif de partie de tête (3), respectivement ; ou (ii) apte à être positionné par rapport aux dispositifs de partie de tête (2, 3) de façon à placer au moins les premiers orifices de sortie du premier dispositif de partie de tête en communication fluidique étanche avec les premiers orifices d'entrée du second dispositif de partie de tête,
le connecteur ayant au moins deux orifices d'entrée de connecteur (28, 29) et au moins deux orifices de sortie de connecteur (30-32),
le connecteur comprenant un premier conducteur d'écoulement (50) reliant un premier sous-ensemble des orifices d'entrée de connecteur (28, 29) et un premier sous-ensemble des orifices de sortie de connecteur (30-32) entre eux, et
le connecteur comprenant un second conducteur d'écoulement (51) reliant un second sous-ensemble des orifices d'entrée de connecteur (28, 29) et un second sous-ensemble des orifices de sortie de connecteur (30-32) entre eux, et
des écoulements de liquide à travers l'un des premier et second conducteurs d'écoulement (50, 51) étant maintenus séparés de ceux à travers l'autre par au moins un des premier et second conducteurs d'écoulement (50, 51),
**caractérisé par le fait que**
les premier et second conducteurs d'écoulement (50, 51) sont disposés de telle sorte que les écoulements de liquide séparés se croisent mutuellement.

2. Connecteur selon la revendication 1 ou le préambule de la revendication 1,
dans lequel les orifices d'entrée de connecteur et de sortie de connecteur (28-32) se trouvent dans des plans sur des côtés opposés respectifs du connecteur et définissent des ouvertures dans des sections de surfaces extérieures respectives, par exemple des sections de surfaces extérieures respectives (39, 40) du connecteur.

3. Connecteur selon la revendication 2,
le connecteur ayant un axe (41) correspondant à une direction d'insertion du connecteur entre les dispositifs de partie de tête (2, 3), et
le connecteur comprenant un dispositif de verrouillage (44, 45) pour empêcher un mouvement dans la direction axiale, par exemple, un dispositif de verrouillage faisant partie d'un mécanisme de verrouillage par encliquetage libérable par manipulation d'au moins une partie (44, 45) à l'encontre d'une force élastique,

4. Connecteur selon l'une quelconque des revendications précédentes,
dans lequel l'un des premier et second conducteurs d'écoulement (50, 51) passe à travers l'autre.

5. Connecteur selon la revendication 4,
le connecteur comprenant un corps (50) ayant un intérieur creux et formant l'un des conducteurs d'écoulement (50, 51), et
les orifices de connecteur (28-32) reliés entre eux par les premier et second conducteurs d'écoulement (50, 51) étant disposés dans des sections de paroi respectives du corps (50).

6. Connecteur selon l'une quelconque des revendications précédentes,
dans lequel les premier et second sous-ensembles des orifices d'entrée de connecteur (28, 29) et/ou des orifices de sortie de connecteur (30-32) ont différents nombres d'orifices.

7. Ensemble de connecteurs pour placer des dispositifs adjacents (2, 3) dans une partie de tête (1) d'un appareil de traitement de liquide en communication fluidique l'un avec l'autre,
les dispositifs de partie de tête (2, 3) étant du type agencé pour recevoir au moins une tête de liaison (68) d'une cartouche de traitement de liquide remplaçable (4, 5),
un premier des dispositifs de partie de tête (2, 3) ayant au moins un orifice d'entrée (12-14), au moins un premier orifice de sortie (16, 17) et au moins un second orifice de sortie (18),
au moins dans une position opérationnelle de la cartouche de traitement de liquide (4), uniquement le premier parmi les premier et second orifices de sortie (16-18) étant en communication fluidique avec au moins un des orifices d'entrée (12-14) par l'intermédiaire de la cartouche de traitement de liquide (4), et les seconds orifices de sortie (18) étant en communication fluidique avec au moins un des orifices d'entrée (12-14), un second des dispositifs de partie de tête (2, 3) ayant au moins un premier orifice d'entrée (19, 20), au moins un second orifice d'entrée (21) et au moins un orifice de sortie (22-24),
au moins dans une position opérationnelle de la cartouche de traitement de liquide (5), uniquement le premier parmi les premier et second orifices d'entrée (19-21) étant en communication fluidique avec au moins un des orifices de sortie (22-24) par l'intermédiaire de la cartouche de traitement de liquide (4, 5), et les seconds orifices d'entrée (21) étant en communication fluidique avec au moins un des orifices de sortie (22-24), un premier connecteur (26) étant apte à être positionné par rapport aux dispositifs de partie de tête (2, 3) de façon à placer les premier et second orifices de sortie (16-18) du premier dispositif de partie de tête (2) en communication fluidique étanche avec les second et premier orifices d'entrée (19-21) du second dispositif de partie de tête (3), respectivement, et un second connecteur (27) étant apte à être positionné par rapport aux dispositifs de partie de tête (2, 3) de façon à placer au moins les premiers orifices de sortie (16, 23) du premier dispositif de partie de tête (2) en communication fluidique étanche avec les premiers orifices d'entrée (19, 20) du second dispositif de partie de tête (3), chaque connecteur (26, 27) ayant au moins deux orifices d'entrée de connecteur (28, 29; 52-54) et au moins deux orifices de sortie de connecteur (30-32 ; 55-57),
chaque connecteur (26; 27) comprenant un premier conducteur d'écoulement (50; 63) reliant un premier sous-ensemble des orifices d'entrée de connecteur (28, 29; 52-54) et un premier sous-ensemble des orifices de sortie de connecteur (30-32; 55-57) entre eux, et
chaque connecteur (26; 27) comprenant un second conducteur d'écoulement (51; 64) reliant un second sous-ensemble des orifices d'entrée de connecteur (28, 29; 52-54) et un second sous-ensemble des orifices de sortie de connecteur (30-32; 55-57) entre eux,
des écoulements de liquide à travers l'un des premier et second conducteurs d'écoulement (50, 51) étant maintenus séparés de ceux à travers l'autre par au moins un des premier et second conducteurs d'écoulement (50, 51), et
au moins un parmi les premier et second connecteurs (26 ; 27) étant un connecteur selon l'une quelconque des revendications 1 à 6.

8. Ensemble selon la revendication 7,
dans lequel les premier et second conducteurs d'écoulement (50, 51) de l'un des premier et second connecteurs (26; 27) sont disposés de telle sorte que les écoulements de liquide séparés se croisent mutuellement, et
les premier et second conducteurs d'écoulement (63, 64) de l'autre des premier et second connecteurs (26, 27) s'étendent essentiellement parallèlement l'un à l'autre.

9. Ensemble selon la revendication 7 ou 8,
dans lequel au moins un parmi (i) les orifices d'entrée de connecteur (28, 29; 52-54) et (ii) les orifices de sortie de connecteur (30-32; 55-57) de chaque connecteur sont au moins au nombre de trois.

10. Partie de tête d'un appareil de traitement de liquide, comprenant :
au moins deux dispositifs de partie de tête adjacents (2, 3),
chaque dispositif de partie de tête (2, 3) étant agencé pour recevoir au moins une tête de liaison (68) d'une cartouche de traitement de liquide remplaçable (4, 5),
un premier des dispositifs de partie de tête (2, 3) ayant au moins un orifice d'entrée (12-14), au moins un premier orifice de sortie (16, 17) et au moins un second orifice de sortie (18),
au moins dans une position opérationnelle de la cartouche de traitement de liquide (4), uniquement le premier parmi les premier et second orifices de sortie (16-18) étant en communication fluidique avec au moins un des orifices d'entrée (12-14) par l'intermédiaire de la cartouche de traitement de liquide (4), et les seconds orifices de sortie (18) étant en communication fluidique avec au moins un des orifices d'entrée (12-14),
un second dispositif de partie de tête (2, 3) ayant au moins un premier orifice d'entrée (19, 20), au moins un second orifice d'entrée (21) et au moins un orifice de sortie (22-24),
au moins dans une position opérationnelle de la cartouche de traitement de liquide (5), uniquement le premier parmi les premier et second orifices d'entrée (19-21) étant en communication fluidique avec au moins un des orifices de sortie (22-24) par l'intermédiaire de la cartouche de traitement de liquide (4, 5), et les seconds orifices d'entrée (21) étant en communication fluidique avec au moins un des orifices de sortie (22-24) ; et
un connecteur (26) selon l'une quelconque des revendications 1 à 6,
le connecteur (26) étant un parmi (i) agencé pour placer les premier et second orifices de sortie (16-18) du premier des dispositifs de partie de tête (2, 3) en communication fluidique étanche avec les second et premier orifices d'entrée (19-21), respectivement, et (ii) agencé pour placer les premier et second orifices de sortie (16-18) du premier dispositif de partie de tête (2) en communication fluidique étanche avec les premier et second orifices d'entrée (19-21), respectivement, du second dispositif de partie de tête (3).

11. Partie de tête selon la revendication 10,
dans laquelle les orifices d'entrée (12-14) du premier dispositif de partie de tête (2) comprennent au moins un premier orifice d'entrée (12, 13) et au moins un second orifice d'entrée (14),
les orifices de sortie (22-24) du second dispositif de partie de tête (3) comprennent au moins un premier orifice de sortie (22, 23) et au moins un second orifice de sortie (24),
et des positions des premier et second orifices d'entrée (12-14, 19-21) par rapport à celles des premier et second orifices de sortie (16-18, 22-24) sont les mêmes pour chacun des premier et second dispositifs de partie de tête (2, 3).

12. Partie de tête selon la revendication 10 ou 11,
dans laquelle les dispositifs de partie de tête (2, 3) sont reliés pour définir un espace, et
le connecteur est apte à être introduit et rétracté depuis l'espace défini par les dispositifs de partie de tête (2, 3).

13. Partie de tête selon l'une quelconque des revendications 10 à 12,
dans laquelle les premier et second orifices d'entrée (19-21) de l'un des dispositifs de partie de tête (2, 3) se font face dans l'espace et comprennent des ouvertures situées dans un plan commun, et
les premier et second orifices de sortie (16-18) de l'autre des dispositifs de partie de tête (2, 3) se font face dans l'espace et comprennent des ouvertures situées dans un plan commun.

14. Appareil de traitement de liquide, comprenant une partie de tête (1) selon l'une quelconque des revendications 10 à 13 et au moins une cartouche de traitement de liquide remplaçable (4, 5).

15. Procédé pour placer des dispositifs adjacents (2, 3) dans une partie de tête (1) d'un appareil de traitement de liquide, par exemple une partie de tête (1) selon l'une quelconque des revendications 10 à 13, en communication fluidique l'un avec l'autre,
les dispositifs de partie de tête (2, 3) étant du type agencé pour recevoir au moins une tête de liaison (68) d'une cartouche de traitement de liquide remplaçable (4, 5),
un premier des dispositifs de partie de tête (2, 3) ayant au moins un orifice d'entrée (12-14), au moins un premier orifice de sortie (16, 17) et au moins un second orifice de sortie (18),
au moins dans une position opérationnelle de la cartouche de traitement de liquide (4), uniquement le premier parmi les premier et second orifices de sortie (16-18) étant en communication fluidique avec au moins un des orifices d'entrée (12-14) par l'intermédiaire de la cartouche de traitement de liquide (4), et les seconds orifices de sortie (18) étant en communication fluidique avec au moins un des orifices d'entrée (12-14),
un second des dispositifs de partie de tête (2, 3) ayant au moins un premier orifice d'entrée (19, 20), au moins un second orifice d'entrée (21) et au moins un orifice de sortie (22-24),
au moins dans une position opérationnelle de la cartouche de traitement de liquide (5), uniquement le premier parmi les premier et second orifices d'entrée (19-21) étant en communication fluidique avec au moins un des orifices de sortie (22-24) par l'intermédiaire de la cartouche de traitement de liquide (4, 5), et les seconds orifices d'entrée (21) étant en communication fluidique avec au moins un des orifices de sortie (22-24), et
le procédé comprenant sélectionner l'un des premier et second connecteurs (26, 27) d'un ensemble de connecteurs selon l'une quelconque des revendications 7 à 9.
